# EUROPÄISCHE PATENTSCHRIFT

(11) **EP 0 947 551 B1**
(45) Veröffentlichungstag und Bekanntmachung des Hinweises auf die Patenterteilung: **11.02.2004**
(21) Anmeldenummer: 99105997.3
(22) Anmeldetag: 25.03.1999
(51) Int. Cl.: C08L 23/10, C08J 5/18

(54) **Poyolefinschaumfolien und Polyolefinbeschichtungen von Substraten**
Foamed polyolefin foils and coatings for substrates
Feuilles spongieux et revêtements polyoléfiniques de substrats

(30) Priorität: 03.04.1998 DE 19815046
(43) Veröffentlichungstag der Anmeldung: 06.10.1999
(73) Patentinhaber: Borealis GmbH, 2323 Schwechat-Mannswörth (AT)
(72) Erfinder: Hesse, Achim Dr., 4020 Linz (AT); Panzer, Ulf Dr., 4320 Perg (AT); Paulik, Christian Dr., 4030 Linz (AT); Wolfsberger, Anton Ing., 4210 Engerwitzdorf (AT); Kirchberger, Manfred Ing., 4731 Prambachkirchen (AT); Niedersüss, Peter Ing., 4020 Linz (AT)
(74) Vertreter: VA TECH Patente GmbH & Co

(56) Entgegenhaltungen:
- EP-A- 0 634 441
- EP-A- 0 634 454
- EP-A- 0 879 830
- EP-A- 0 890 612

## Beschreibung

Die Erfindung betrifft Polyolefinschaumfolien und/oder Polyolefinbeschichtungen von textilen Flächengebilden, Kunststofffolien, Papier, Karton und Metall mit hoher Maßgenauigkeit und Wärmeschockbeständigkeit, die für einen Einsatz auf den Sektoren Verpackung, Nahrungsmittel, Pharmazie, Textil- und Hygieneindustrie, Fahrzeug-, Geräte- und Maschinenbau, Elektrotechnik, Elektronik, Haushaltsgeräte, Medizin, Bauindustrie, Transportsysteme und Transportverpackung geeignet sind, sowie Verfahren zu ihrer Herstellung.

Polyolefinfolien und Polyolefinbeschichtungen auf Basis von Polyolefinen wie Polyethylen oder Polypropylen sind bekannt (Schenkel, G., Kunststoff-Extrudertechnik, Carl-Hanser-Verlag, München, 1963; Predöhl, W., Folienextrusion mit Coextrusion, VDI-Verlag, Düsseldorf 1980).

Polyethylen läßt sich zu Folien und Beschichtungen mit guter Maßgenauigkeit verarbeiten. Der Nachteil von Folien und Beschichtungen auf Basis Polyethylen liegt jedoch in der niedrigen Wärmeschockbeständigkeit (Vicat-B-Erweichungstemperatur 76 °C), so daß eine Anwendung von Folien und Beschichtungen in Einsatzgebieten, bei denen eine kurzzeitige thermische Belastung über 100 °C wie durch Dampf oder eine Wärmeschockbelastung von Fahrzeug- oder Geräteteilen oder Kurzschlußbelastung von Elektrogeräten oder Kabeln bis zum Stromausfall nicht erfolgen kann.

Bekannte Verfahren zur Erhöhung der Wärmeschockbeständigkeit von Polyethylen-Folien und -Beschichtungen sind die Vernetzung durch ionisierende Strahlung [Brooks, N., J. of Indust. Irradiation Tech. 1(3), 237-257], die Pfropfung von Silanverbindungen und hydrolytische Vernetzung der Pfropfcopolymeren [Vogt, H., Kunststoffe 92(1992)9, 830-833] sowie die Vemetzung durch Peroxide [Dorn, M., Kunststoffe 80(1990)7, 830-837]. Durch die Vernetzung wird eine Wärmeschockbeständigkeit des Polyethylens bis 100°C erreicht. Von Nachteil sind jedoch der hohe Aufwand des zusätzlichen Verfahrensschritts und die fehlende Recyclingfähigkeit der Produkte.

Folien und Beschichtungen aus Polypropylen (Vicat-B-Temperatur 86-94°C) können kurzzeitig einer Wärmeschockbelastung bis 140°C ausgesetzt werden. Von Nachteil bei Folien und Beschichtungen aus Polypropylen ist deren geringe Maßgenauigkeit. Bei der Herstellung der Folien und Beschichtungen entstehen bereits bei mittleren Abzugsgeschwindigkeiten Einschnürungen ("Neck in") quer zur Abzugsrichtung, was sich in einer schwankenden Breite und Dicke der Folien und Beschichtungen äußert.

Bei Flachfolienverfahren, wie der Chillrollextrusion, dem Extrusionsbeschichten und dem Glättwerkverfahren kommt es bei der Verarbeitung mit zunehmender Abzugsgeschwindigkeit bzw. Ausstoß zu extremen Fließunregelmäßigkeiten, speziell im Randbereich. Diese "draw variations" machen die Herstellung einer Folie oder Folienbeschichtung mit gleichmäßiger Dickenverteilung und konstanter Folienbreite unmöglich. In vielen Fällen führt dies zu Anlagenstillständen auf Grund von Abrissen, Löchern oder nicht beherrschbarem Abziehen oder Aufwickeln bzw. unwirtschaftlicher Produktion durch geringe Abzugsgeschwindigkeiten bzw. durch geringen Ausstoß.

Im Blasfolienprozeß kommt es mit zunehmendem Anlagendurchsatz bzw. bei zunehmenden Anlagengeschwindigkeiten bei üblichen Polypropylenen zu Instabilitäten der Folienblase, was wiederum Dicken- und Breitenschwankungen zur Folge hat. In vielen Fällen kommt es durch das Pumpen der Folienblase zu Abrissen und dadurch zum völligen Anlagenstillstand.

Bekannte Verfahren zur Verbesserung der Maßgenauigkeit von Folien und Beschichtungen aus Polypropylen bestehen darin, Blends aus Polypropylen und 5 bis 20% Polyethylen (US 4 526 919; JP 53 128 662, JP 59 049 921), Blends aus Polypropylen, Polystyren und Polybutadien (DE 2937528) oder Blends aus Polypropylen und Poly(meth)acrylaten (US 5,506,307; EP 570 221) bei der Herstellung der Folien oder Beschichtungen einzusetzen. Der Nachteil dieser Zusätze besteht jedoch in der Herabsetzung der Wärmeschockbeständigkeit und der starken Herabsetzung der Transparenz der Folien und Beschichtungen.

In der nicht vorveröffentlichten europäischen Anmeldung EP-A-0 879 830 sind modifizierte Propylen-Homopolymere und Copolymere mit verbesserter Verarbeitbarkeit beschrieben, konkrete Angaben über die Herstellung von Schaumstofffolien oder von Beschichtungen sind jedoch nicht enthalten.

Die Aufgabe der vorliegenden Erfindung bestand in der Entwicklung von Schaumfolien und Beschichtungen auf Basis von Polypropylen, die eine hohe Maßgenauigkeit und Wärmeschockbeständigkeit besitzen, sowie von Verfahren zu ihrer Herstellung.

Die erfindungsgemäße Aufgabe wurde durch Polyolefinschaumfolien und/oder Polyolefinbeschichtungen von textilen Flächengebilden, Kunststoffolien, Papier, Karton und Metall mit hoher Maßgenauigkeit und Wärmeschockbeständigkeit, wobei die Polyolefinschaumfolien und/oder Polyolefinbeschichtungen aus modifizierten Polypropylenen, die 5 bis 50 Masse%, im Gemisch mit nichtmodifizierten Polypropylenen vorliegen, und wobei die nichtmodifizierten Polypropylene, bevorzugt 95 bis 50 Masse%, aus
1) üblichen Propylenpolymeren, bevorzugt unter Anwendung von Ziegler-Natta-Katalysatoren oder Metallocenkatalysatoren hergestellten Propylenhomopolymeren und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230 °C/2,16 kg, bevorzugt 1 bis 100 g/10 min bei 230 °C/2,16 kg, und/oder
2) einer Polyolefinmischung mit einem Mw/Mn-Verhältnis von 2 bis 6 und einem Schmelzindex von 1 bis 40 g/10 min bei 230 °C/2,16 kp, die aus
   2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
   2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist, besteht und/oder
3) weitgehend amorphen Polypropylenen oder Propylen-Copolymeren mit einem Anteil an kristallinem Polypropylen bzw. kristallinem Propylen-Copolymer unter 10 Masse% , einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist, und/ oder
4) nichtisotaktischen Propylen-Homopolymeren mit einem Schmelzpunkt von 145 bis 165°C, einer Schmelzviscosität über 200000 cps bei190°C, einer Kristallisationswärme von 4 bis 10 cal/g und einem löslichen Anteil in Diethylether von 35 Masse% bis 55 Masse%.
   bestehen,
wobei die Polypropylene 0,01 bis 2,5 Masse% Stabilisatoren, 0,01 bis 1 Masse% Verarbeitungshilfsmittel und gegebenenfalls 0,1 bis 1 Masse% Antistatika, 0,2 bis 3 Masse% Pigmente, 0,05 bis 1 Masse% Nukleierungsmittel, 2 bis 20 Masse% Flammschutzmittel, jeweils bezogen auf die Summe der Polypropylene, als Hilfsstoffe, und/ oder gegebenenfalls 10 bis 70 Masse%, bevorzugt 20 bis 50 Masse%, bezogen auf die Summe der Polypropylene. anorganische und/oder organische Füll- und/oder Verstärkungsstoffe enthalten.
gelöst,
wobei erfindungsgemäß die modifizierten Polypropylene modifizierte Propylenpolymere mit Schmelzindices von 0,1 bis 50 g/10 min bei 230°C/2,16 kg, bevorzugt 1 bis 40 g/10 min bei 230°C/2,16 kg, und einem Quotienten aus der Grenzviscosität des modifizierten Polypropylens und der Grenzviscosität des nichtmodifizierten Polypropylens mit weitgehend gleichem Molmassen-Gewichtsmittel von 0,20 bis 0,95 sind, die durch
a) durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren in Gegenwart ionisierender Strahlung bzw. thermisch zerfallenden Radikalbildnern, oder
b) durch Umsetzung von funktionalisierten Polypropylenen, bevorzugt von Säureund/oder Säureanhydridgruppen enthaltenden Polypropylenen, mit mehrfunktionellen Verbindungen entgegengesetzter Reaktivität, bevorzugt mit C₂- bis C₁₆ - Diaminen und/ oder C₂- bis C₁₆ - Diolen, oder
c) durch hydrolytische Kondensation von Polypropylenen, die hydrolysierbare Silangruppen enthalten,
   hergestellt worden sind.

Beispiele für diese durch Behandlung von Polypropylenen mit mehrfunktionell ethylenisch ungesättigten Monomeren in Gegenwart ionisierender Strahlung bzw. thermisch zerfallenden Radikalbildnern hergestellten modifizierten Propylenpolymeren sind insbesondere :
- modifizierte Polypropylene durch Umsetzung von Polypropylenen mit Bismaleimidoverbindungen in der Schmelze (EP 574 801 ; EP 574804),
- modifizierte Polypropylene durch Behandlung von Polypropylenen mit mehrfunktionell ethylenisch ungesättigten Monomeren unter Einwirkung ionisierender Strahlung (EP 678527),
- modifizierte Polypropylene durch Behandlung von Polypropylenen mit mehrfunktionell ethylenisch ungesättigten Monomeren in Gegenwart von Peroxiden in der Schmelze (EP 688817; EP 450342).

Eine bevorzugte Variante für die durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren in Gegenwart thermisch zerfallender Radikalbildner hergestellten modifizierten Polypropylenen sind modifizierte Propylenpolymere, die nach einem kontinuierlichen Verfahren hergestellt worden sind, bei dem
1) Polypropylenpartikel in Form von Pulvern, Granulaten oder Grießen mit einer bevorzugten Korngröße im Bereich von 0,001 bis 7 mm, die aus
   1.1) Propylen-Homopolymeren, insbesondere aus Propylen-Homopolymeren mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w} / Mₙ -Werten von 5 bis 60, die in einer Reaktorkaskade unter Einsatz von Ziegier-Natta-Katalysatoren oder Metallocenkatalysatoren hergestellt wurden, und/oder aus
   1.2) Copolymeren aus Propylen und Ethylen bzw. α-Olefinen mit 4 bis 18 C-Atomen, bevorzugt aus statistischen Propylen-Copolymeren, Propylen-Blockcopolymeren, statistischen Propylen-Blockcopolymeren und/oder elastomeren Polypropylenen, oder aus Mischungen der genannten modifizierten Polypropylene, bestehen,
   in einem kontinuierlichen Mischer mit 0,05 bis 3 Masse%, bezogen auf die eingesetzten Polypropylene, an Acylperoxiden, Alkylperoxiden, Hydroperoxiden Peroxycarbonaten und/oder Perestern als thermisch zerfallende Radikalbildner, deren thermischer Zerfall bevorzugt unterhalb 210°C abgeschlossen ist und die gegebenenfalls mit inerten Lösungsmitteln verdünnt sind, unter Erwärmung auf 30 bis 100°C, bevorzugt auf 70 bis 90°C, gemischt worden sind,
2) leichtflüchtige bifunktionelle Monomere, insbesondere C₄- bis C₁₀- Diene und/oder C₇- bis C₁₀- Divinylverbindungen, durch die Polypropylenpartikel aus der Gasphase, bevorzugt in kontinuierlichen Durchflußmischern als kontinuierliche Gas-Feststoff-Absorber, bei einer Temperatur T von 20°C bis 120°C, vorzugsweise von 60 bis 100°C, und einer mittleren Sorptionszeit von τₛ von 10s bis 1000 s, bevorzugt 60 s bis 600 s, sorbiert worden sind, wobei in den Polypropylenpartikeln der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
3) die Polypropylenpartikel, in denen die Acylperoxide, Alkylperoxide, Hydroperoxide, Peroxycarbonate und/oder Perester als thermisch zerfallende Radikalbildner und die bifunktionell ungesättigten Monomere sorbiert worden sind, unter einer Atmosphäre aus Inertgas und diesen leichtflüchtigen bifunktionellen Monomeren bei 110°C bis 210°C in kontinuierlich arbeitenden Knetern oder Extrudern. vorzugsweise in Doppelschneckenextrudern, aufgeschmolzen worden sind und die thermisch zerfallenden Radikalbildner dabei zersetzt worden sind,
4) die Schmelze danach auf 220°C bis 300°C erwärmt worden ist, wobei nichtumgesetzte Monomere und Zerfallsprodukte entfernt worden sind, und
5) die Schmelze in an sich bekannter Weise granuliert worden ist,
   und bei dem vor dem Verfahrensschritt 1) und/oder 5) und /oder vor bzw. während des Verfahrensschrittes 3) und/oder 4) als weitere Hilfsstoffe 0,01 bis 2,5 Masse% Stabilisatoren. 0,1 bis 1 Masse% Antistatika, 0,2 bis 3 Masse% Pigmente , 0,05 bis 1 Masse% Nukleierungsmittel und/oder 0,01 bis 5 Masse% Verarbeitungshilfsmittel, bezogen auf das eingesetzte Polypropylen, zugesetzt worden sind.

Weiterhin sind als modifizierte Propylenpolymere, die in den erfindungsgemäßen Polyolefinfolien und/oder Polyolefinbeschichtungen enthaltenen sind, durch polymeranaloge Umsetzung von funktionalisierten Polypropylenen, bevorzugt von Säureund/oder Säureanhydridgruppen enthaltenden Polypropylenen, mit mehrfunktionellen Verbindungen entgegengesetzter Reaktivität, bevorzugt mit C₂₋ bis C₁₆ - Diaminen und/oder C₂₋ bis C₁₆ - Diolen, hergestellte modifizierte Propylenpolymere geeignet.

Beispiele für die durch polymeranaloge Umsetzungen erzeugten modifizierten Propylenpolymere sind insbesondere :
- modifizierte Polypropylene durch Umsetzung von Maleinsäureanhydridgepfropftem Polypropylen mit Diaminen oder Polyglycolen (EP 177401; JP 08 176 365),
- modifizierte Polypropylene durch Umsetzung von Säure- oder Säureanhydridgruppen enthaltenden Polypropylenen mit Epoxy-, Hydroxy- oder Aminogruppen enthaltenden Polymeren (EP 307684; EP 299486).

Eine weitere Variante für die in den Polyolefinfolien und/oder Polyolefinbeschichtungen enthaltenen modifizierten Propylenpolymeren sind modifizierte Propylenpolymere, die durch hydrolytische Kondensation von Polypropylenen, die hydrolysierbare Silangruppen enthalten, hergestellt werden. Beispiele bilden die in DE 4107635 oder US 47 14 716 beschriebenen Produkte.

Die in den erfindungsgemäßen Polyolefinschaumfolien und/oder Polyolefinbeschichtungen enthaltenen nichtmodifizierten Propylenpolymere 1) sind bevorzugt Propylen-Homopolymere und/oder Copolymere aus Propylen und Ethylen bzw. α-Olefinen mit 4 bis 18 C-Atomen sowie Mischungen der genannten Polypropylene mit Schmelzindices von 0.1 bis 300 g/10 min bei 230°C/2,16 kg, bevorzugt 1 bis 100 g/10 min bei 230°C/2.16 kg. Besonders geeignet sind dabei Propylen-Homopolymere mit bimodaler Molmassenverteilung, Molmassen-Gewichtsmitteln M_{w} von 50000 bis 1500000 g/mol, Molmassen-Zahlenmitteln Mₙ von 25000 bis 100000 g/mol und M_{w} / Mₙ -Werten von 2 bis 60, die in einer Reaktorkaskade hergestellt wurden. Die Copolymeren aus Propylen und Ethylen bzw. α-Olefinen können in Form von statistischen Propylen-Copolymeren, Propylen-Blockcopolymeren und/ oder statistischen Propylen-Blockcopolymeren vorliegen.

Die als nichtmodifizierte Polypropylenkomponente 2) in den erfindungsgemäßen Polyolefinschaumfolien und/oder Polyolefinbeschichtungen enthaltenen Polyolefinmischungen aus kristallinen Copolymeren und elastischen Copolymeren sind beispielsweise die in EP 400 333 oder EP 472 946 beschriebenen Polymermischungen.

Die als nichtmodifizierte Polypropylenkomponente 3) in den erfindungsgemäßen Polyolefinschaumfolien und/oder Polyolefinbeschichtungen enthaltenen weitgehend amorphen Polypropylene oder Propylen-Copolymere sind insbesondere Stereoblock-Polypropylene, die beispielsweise unter Anwendung hochaktiver, Metalloxid-fixierter Ziegler-Natta-Katalysatoren [Collette, J., Macromolecules 22 (1989), 3851-3858: DE 2830160] oder löslicher Ziegler-Natta-Katalysatoren [de Candia. F., Makromol. Chem. 189 (1988), 815-821], gegebenenfalls unter nachfolgender Reaktivmodifizierung ( EP 636863) und/oder Degradation (EP 640 850), hergestellt werden.

Beispiele für die als nichtmodifizierte Polypropylenkomponente 4) in den erfindungsgemäßen Polyolefinschaumfolien und/oder Polyolefinbeschichtungen enthaltenen nichtisotaktischen Propylen-Homopolymere sind die in EP 475 307 oder EP 475 308 beschriebenen Produkte.

Besonders bevorzugt werden Polyolefinschaumfolien und/oder Polyolefinbeschichtungen, die neben den modifizierten Polypropylenen mehrere der nichtmodifizierten Polypropylene 1) bis 4) enthalten.

Die in den erfindungsgemäßen Polyolefinschaumfolien und/oder Polyolefinbeschichtungen enthaltenen Stabilisatoren sind bevorzugt Mischungen aus 0,01 bis 0,6 Masse% phenolischen Antioxidantien, 0,01 bis 0,6 Masse% 3-Arylbenzofuranonen, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS).

Geeignete phenolische Antioxidantien sind 2-tert.Butyl-4,6-dimethylphenol, 2,6-Ditert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol. 2,2'-Methylenbis(6-tert.butyl-4-methylphenol), 4,4'-Thio-bis-(6-tert.butyl-2-methylphenol), 3(3,5-Ditert.butyl - 4 - hydroxyphenyl)propionsäureoctadecylester, 1,3,5. - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6 tetramethyl-4-piperidylsebazat und/oder Poly - ([1,1,3,3,-tetramethylbutyl)-imino] - 1,3,5- triazin - 2,4,diyl)[2,2,6,6-tetramethylpiperidyl)-amino]-hexamethylen-4-(2,2,6,6-tetra-methyl)piperidyl)-imino] besonders geeignet.

Die in den erfindungsgemäßen Polyolefinschaumfolien und/oder Polyolefinbeschichtungen gegebenenfalls enthaltenen Nukleierungsmittel sind bevorzugt α-Nukleierungsmittel wie Talkum, Sorbite und Sorbitderivate, Natriumbenzoat oder das Natriumsalz der Methylen-bis(2,4-di-tert.bu-tylphenol)-phosphorsäure oder β-Nukleierungsmittel wie Adipinsäure, Adipinsäuredianilid, Salze von Dicarbonsäuren wie Calciumpimelat, Chinacridinonchinon und/ oder N,N'-Dicyclododecyl-4,4-biphenyldicarboxamid.

Als Verarbeitungshilfsmittel können die erfindungsgemäßen Polyolefinschaumfolien und/oder Polyolefinbeschichtungen Calciumstearat, Magnesiumstearat und/oder Wachse enthalten.

Beispiele für die in den erfindungsgemäßen Polyolefinschaumfolien und/oder Polyolefinbeschichtungen gegebenenfalls enthaltenen anorganischen Füll- und/oder Verstärkungsstoffe sind SiO₂, insbesondere in Form von Glas oder Quarz; Silikate, insbesondere Talkum; Titanate, Titandioxid, Aluminiumoxid, Kaolin, Magnesiumoxid, Magnesite, Eisenoxide, Siliciumcarbid, Siliciumnitrid, Bariumsulfat und/oder Calciumcarbonate.

Beispiele für die in den erfindungsgemäßen Polyolefinschaumfolien und/oder Polyolefinbeschichtungen gegebenenfalls enthaltenen organische Füll- und/oder Verstärkerstoffe sind Holzschliff, Fasern oder Partikel aus Cellulose, Stärke, Polymethylmethacrylat, Polyvinylalkohol, Polytetrafluorethylen, Polyamid, Polyethylenterephthalat oder duroplastischen Kunststoffen.

Die erfindungsgemäßen Polyolefinschaumfolien sind bevorzugt Schaumfolien, die nach dem Folienblasverfahren, Kalanderverfahren, Chill-Roll-Verfahren, oder Glättwerkverfahren hergestellt wurden und mit chemischen bzw. physikalischen Treibmitteln geschäumte Folien. Die Herstellung kann sowohl als Monofolie oder als coextrudierte Folie erfolgen.

Die erfindungsgemäßen Polyolefinbeschichtungen sind Beschichtungen, die nach dem Kalanderverfahren, Chill-Roll-Verfahren, Glättwerkverfahren, Extrusionsbeschichtungsverfahren, Rohrbeschichtungsverfahren oder Kabelummantelungsverfahren hergestellt worden sind. Die Beschichtungen von Substraten ergeben flächige Mehrkomponentenverbunde, die aus einer oder mehreren Schichten der Polypropylenmischungen und Metallfolien, Kunststoffolien, Papierbahnen und/oder Textilbahnen aufgebaut sind, oder radiale Beschichtungen in Form von Rohrbeschichtungen, Kabelisolierungen oder Kabelmänteln.

Zwischen Substratschicht und der erfindungsgemäßen Polyolefinbeschichtung können Haftvermittlerzwischenschichten einer Schichtdicke von 0,5 bis 20 µm aus polaren Olefincopolymeren und/oder Olefinpfropfcopolymeren zwischengeschaltet sein.

Bevorzugt bestehen die Polypropylenkomponenten in den nach dem Folienblasverfahren oder nach dem Kalanderverfahren hergestellten Polyolefinfolien oder Beschichtungen aus 5 bis 50 Masse% modifizierten Polypropylenen mit Schmelzindices von 0,25 bis 8 g/10 min bei 230°C/2,16 kg und 95 bis 50 Masse% nichtmodifizierten Polypropylenen mit Schmelzindices von 0,25 bis 20 g/10 min bei 230°C/2,16 kg. Die nichtmodifizierten Polypropylene bestehen insbesondere aus Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren und/oder den Polypropylenkomponenten 2), 3) und/oder 4).
Die Polypropylenkomponenten von Folien oder Beschichtungen, die nach dem Chill-Roll-Verfahren hergestellt wurden, bestehen bevorzugt aus 5 bis 30 Masse% modifizierten Polypropylenen mit Schmelzindices von 1 bis 30 g/10 min bei 230°C/2,16 kg und 95 bis 70 Masse% nichtmodifizierten Polypropylenen mit Schmelzindices von 1 bis 40 g/10 min bei 230°C/2,16 kg.

Die Polypropylenkomponenten von Folien oder Beschichtungen, die nach dem Glättwerkverfahren hergestellt wurden, bestehen bevorzugt aus 5 bis 30 Masse% modifizierten Polypropylenen mit Schmelzindices von 0,25 bis 15 g/10 min bei 230°C/2,16 kg und 95 bis 70 Masse% nichtmodifizierten Polypropylenen mit Schmelzindices von 0,25 bis 20 g/10 min bei 230°C/2,16 kg.

Mit physikalischen und/oder chemischen Treibmitteln geschäumte Polyolefinfolien enthalten als Polypropylenkomponenten bevorzugt Mischungen aus 5 bis 100 Masse% modifizierten Polypropylenen mit Schmelzindices von 0,25 bis 12 g/10 min bei 230 °C/2,16 kg und 0 bis 95 Masse% nichtmodifizierten Polypropylenen mit Schmelzindices von 0,25 bis 12 g/10 min bei 230 °C/2,16 kg.

Die Polypropylenkomponenten von Polyolefinbeschichtungen, die nach dem Extrusionsbeschichtungsverfahren hergestellt wurden, bestehen bevorzugt aus 5 bis 30 Masse% modifizierten Polypropylenen mit Schmelzindices von 1 bis 50 g/10 min bei 230 °C/2,16 kg und 95 bis 70 Masse% nichtmodifizierten Polypropylenen mit Schmelzindices von 2 bis 100 g/10 min bei 230 °C/2,16 kg. Die nichtmodifizierten Polypropylene sind insbesondere Copolymere aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, und/oder die Polypropylenkomponenten 2), 3) und/oder 4).

Die Polyolefinschaumfolien und/oder Polyolefinbeschichtungen von textilen Flächengebilden, Kunststoffolien, Papier, Karton und Metall mit hoher Maßgenauigkeit und Wärmeschockbeständigkeit werden nach einem Verfahren durch Aufschmelzen der Polyolefine in kontinuierlichen Knetem, bevorzugt in Extrudern mit UD von 20 bis 33, bei Temperaturen von 160 bis 320 °C, Homogenisierung und
a) Aufgeben als Schmelze auf ein Mischwalzwerk und/oder auf einen Kalander, Abkühlen, Beschneiden und Aufwickeln der Folie; Aufkaschieren auf Flächenbahnen aus Metallfolien, Kunststoffolien, Papierbahnen oer Textilbahnen, gegebenenfalls unter Zwischenschaltung einer Haftvermittlerschicht, und Aufwickeln der Mehrkomponentenverbunde, oder
b) Austragen über eine Breitschlitzdüse, Aufbringen auf eine Chill-Roll-Anlage und Abziehen als Folie, Beschneiden und Aufwickeln, oder bei Chill-Roll-Anlagen mit mehreren Extrudern, Abziehen als Coextrusionsfolie, Beschneiden und Aufwickeln; Aufkaschieren bzw. Direktbeschichten auf Flächenbahnen aus Metallfolien, Kunststoffolien, Papierbahnen oder Textilbahnen, gegebenenfalls unter Zwischenschaltung einer Haftvermittlerschicht, und Aufwickeln der Mehrkomponentenverbunde, oder
c) Aufkaschieren auf Flächenbahnen aus Metallfolien, Kunststoffolien, Papierbahnen oer Textilbahnen, gegebenenfalls unter Zwischenschaltung einer Haftvermittlerschicht, und Aufwickeln der Mehrkomponentenverbunde, oder
d) nach Eindosierung von Treibmitteln Austragen über eine Breitschlitzdüse auf ein Glättwerk oder eine Chill-Roll-Anlage, Abziehen als geschäumte Folie, Beschneiden und Aufwickeln; oder Austragen über eine Ringdüse, gegebenenfalls Kühlen unter Einpressen von Luft und Abziehen über einen Kalibrierdom, gegebenenfalls mit innerer Luftkühlung, als Schaumfolienschlauch, Aufschneiden, Flachlegen und Aufwickeln; oder
e) Austragen des Schmelzefilms nach dem Extrusionsbeschichtungsverfahren direkt auf die Flächenbahnen aus Metallfolien, Kunststoffolien, Papierbahnenoder Textilbahnen, gegebenenfalls unter Zwischenschaltung einer Haftvermittlerschicht, und Aufwickeln der Mehrkomponentenverbunde, oder
f) Austragen über eine Breitschlitzdüse einer Rohrbeschichtungsanlage und schmelzflüssig Aufsiegeln auf das rotierende Rohr, gegebenenfalls unter Zwischenschaltung einer Haftvermittlerschicht hergestellt,
wobei die Polyolefine aus modifizierten Polypropylenen, die 5 bis 50 Masse%, im Gemisch mit nichtmodifizierten Polypropylenen vorliegen, und wobei die nichtmodifizierten Polypropylene, bevorzugt 95 bis 50 Masse%, aus
1) üblichen Propylenpolymeren, bevorzugt unter Anwendung von Ziegler-Natta-Katalysatoren oder Metallocenkatalysatoren hergestellten Propylenhomopolymeren und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230 °C/2,16 kg, bevorzugt 1 bis 100 g/10 min bei 230 °C/2,16 kg, und/oder
2) einer Polyolefinmischung mit einem Mw/Mn-Verhältnis von 2 bis 6 und einem Schmelzindex von 1 bis 40 g/10 min bei 230 °C/2,16 kp, die aus
   2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
   2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist, besteht und/oder
3) weitgehend amorphen Polypropylenen oder Propylen-Copolymeren mit einem Anteil an kristallinem Polypropylen bzw. kristallinem Propylen-Copolymer unter 10 Masse% , einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist, und/ oder
4) nichtisotaktischen Propylen-Homopolymeren mit einem Schmelzpunkt von 145 bis 165°C, einer Schmelzviscosität über 200000 cps bei190°C, einer Kristallisationswärme von 4 bis 10 cal/g und einem löslichen Anteil in Diethylether von 35 Masse% bis 55 Masse%, bestehen,
wobei den Polyolefinen 0,01 bis 2,5 Masse% Stabilisatoren, 0,01 bis 1 Masse% Verarbeitungshilfsmittel und gegebenenfalls 0,1 bis 1 Masse% Antistatika, 0,2 bis 3 Masse% Pigmente, 0,05 bis 1 Masse% Nukleierungsmittel, 2 bis 20 Masse% Flammschutzmittel, jeweils bezogen auf die Summe der Polyolefine, als Hilfsstoffe, und/ oder gegebenenfalls 10 bis 70 Masse%, bevorzugt 20 bis 50 Masse%, bezogen auf die Summe der Polyolefine. anorganische und/oder organische Füll- und/oder Verstärkungsstoffe zugesetzt werden,
wobei erfindungsgemäß die modifizierten Polypropylene modifizierte Propylenpolymere mit Schmelzindices von 0.1 bis 50 g/10 min bei 230°C/2,16 kg, bevorzugt 1 bis 40 g/10 min bei 230°C/2,16 kg, und einem Quotienten aus der Grenzviscosität des modifizierten Polypropylens und der Grenzviscosität des nichtmodifizierten Polypropylens mit weitgehend gleichem Molmassen-Gewichtsmittei von 0,20 bis 0,95 sind und
a) durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren in Gegenwart ionisierender Strahlung bzw. thermisch zerfallenden Radikalbildnern, oder
b) durch Umsetzung von funktionalisierten Polypropylenen, bevorzugt von Säureund/oder Säureanhydridgruppen enthaltenden Polypropylenen, mit mehrfunktionellen Verbindungen entgegengesetzter Reaktivität, bevorzugt mit C₂₋ bis C₁₆ - Diaminen und/ oder C₂ bis C₁₆ - Diolen, oder
c) durch hydrolytische Kondensation von Polypropylenen, die hydrolysierbare Silangruppen enthalten,
   hergestellt worden sind.

Für das Aufschmelzen der modifizierten Polypropylene bzw. Polypropylenmischungen nach dem erfindungsgemäßen Verfahren sind Extruder mit Kurzkompressionsschnecken oder Dreizonenschnecken mit L/D= 20-40 geeignet. Bevorzugt werden 5-Zonen-Schnecken mit Einzugszone, Kompressionszone, Scherzone, Dekompressionszone und Homogenisierungszone. Schnecken mit Schnittiefen von 1 : 2.5 bis 1 : 3,5 sind bevorzugt geeignet. Besonders günstig ist die Zwischenschaltung von statischen Mischern oder Schmelzepumpen zwischen Zylinder und Düse.

Bei der Herstellung von Blasfolien nach dem erfindungsgemäßen Verfahren werden Folienblasanlagen mit Ringdüsen mit Durchmessern im Bereich von 50 bis 600 mm bevorzugt. Günstige Schmelzetemperaturen liegen im Bereich von 190°C bis 280°C. Übliche Foliendicken für Blasfolien aus den Polyolefinmischungen sind 6 bis 300 µm.

Folien und Beschichtungen aus den modifizierten Polypropylenen bzw. Polypropylenmischungen mit Dicken von 60 bis 1200 µm, insbesondere von 200 bis 600 µm, werden bevorzugt auf Kalanderanlagen aus Plastifizierextruder oder Plastifizierkneter, Mischwalzwerk, 4-Walzen-F-Kalander mit Kühlwalzen und Temperierwalzen und Abzugseinheit insbesondere unter folgenden Fahrbedingungen hergestellt :
- Zylindertemperaturen des Plastifizierextruders im Bereich von 190 bis 240°C,
- Massetemperatur am Austrittsspalt der Schmelze 180 bis 230°C,
- Kalanderwalzentemperatur ansteigend von 185 bis 215°C,
- Friktion 1 : 1.15 bis 1: 1,25,
- Schockartige Abkühlung der Folie nach Verlassen des Kalanders auf 5 bis 35°C,
- Nachfolgende Temperierung der Folie bei 70 bis 145°C.

Bevorzugt werden Schaumfolien und Beschichtungen aus den modifizierten Polypropylenen bzw. Polypropylenmischungen mit Dicken von 20 bis 200 µm nach dem Chill-Roll-Verfahren hergestellt, bei Foliendicken über 200 µm können durch einseitige Abkühlung bei diesem Verfahren Rollneigungserscheinungen und/oder unterschiedliche Eigenschaften auftreten. Die Herstellung der Folien erfolgt auf üblichen Chill-Roll-Anlagen aus Breitschlitzdüse, Saugrakel, Luftrakel, Kühlwalze I, Putzwalze, Kühlwalze II und Abzugseinheit. Bevorzugte Schmelzetemperaturen beim Austritt der Polyolefinmischung aus der Breitschlitzdüse liegen im Bereich von 200 bis 260°C. Bei Folien mit hohem Glanz und hoher Transparenz sind höhere Schmelzetemperaturen günstig. Beide Kühlwalzen sollen auf 10 bis 80°C, bevorzugt 15 bis 40°C eingestellt werden. Für die Herstellung von 20 bis 200 µm dicken Coextrusionsfolien werden Anlagen mit Adapter oder Düsencoextrusion verwendet, übliche Kühlwalzentemperaturen liegen dabei im Bereich von 15 bis 70°C.

Folien und Beschichtungen aus den modifizierten Polypropylenen bzw. Polypropylenmischungen mit Dicken von 0,20 bis 10 mm werden bevorzugt nach der Glättwerktechnologie hergestellt, Folien mit Dicken unter 0,20 mm ergeben nach dieser Technologie eine ungünstige Dickenverteilung. Günstige Massetemperaturen der Schmelze aus den modifizierten Polypropylenen bzw. Polypropylenmischungen liegen bei 190 bis 250°C.

Die kontinuierlichen Kneter bei der erfindungsgemäßen Herstellung von Schaumfolien aus den modifizierten Polypropylenen bzw. Polypropylenmischungen können Einschneckenextruder mit L/D von 20 bis 40 oder gleichlaufende Doppelschneckenextruder oder Extruderkaskaden aus Homogenisierextruder (Ein- oder Doppelschnecke) und Verschäumungsextruder darstellen. Gegebenenfalls können Schmelzepumpe und/oder statischer Mischer zusätzlich zwischen Extruder und Düsenkopf eingesetzt werden. Die dem Granulat bzw. der Polymerschmelze zugesetzten Treibmittel sind bevorzugt :
- gasabspaltende Treibmittel wie Natriumhydrogencarbonat, Azodicarbonamid, Zitronensäure/Bicarbonat-Treibsysteme und/oder Cyanursäuretrihydrazid,
- leichtflüchtige Kohlenwasserstoffe wie Pentan, Isopentan, Propan und/oder Isobutan,
- Halogenkohlenwasserstoffe wie Monofluortrichlormethan und/oder Difluormonochlormethan
- Gase wie Stickstoff, Argon und/oder Kohlendioxid.

Günstige Düsentemperaturen für den Austrag der Treibmittel- enthaltenden Schmelze sind 150 bis 200°C. Bevorzugte Schaumdichten der Schaumfolien aus den modifizierten Polypropylenen bzw. Polypropylenmischungen liegen im Bereich von 10 bis 700 kg/m³, insbesondere bei 10 bis 500 kg/m².

Die Extrusions- oder Coextrusionsbeschichtung von Metallfolien, Kunststoffolien, Papierbahnen oder Textilbahnen mit Schmelzen der Polyolefinmischungen erfordert dagegen Massetemperaturen im Bereich von 190 bis 320°C. Übliche Beschichtungsdicken liegen zwischen 5 bis 70 µm.

Für die Extrusionsbeschichtung von Metallrohren sind Massetemperaturen der Schmelzen aus den modifizierten Polypropylenen bzw. Polypropylenmischungen von 240°C bis 320°C und eine Vorwärmung des Rohrmaterials auf 115 bis 160°C erforderlich.

Die erfindungsgemäße Herstellung von Einzelkabeln mit Kabelisolationen aus den modifizierten Polypropylenen bzw. Polypropylenmischungen erfordert eine Vorwärmung des Leiteradermaterials auf 115 bis 150°C. Die Extruderbeschichtung des Leitermaterials mit den modifizierten Polypropylenen bzw. Polypropylenmischungen erfolgt bei Schmelzetemperaturen von 190°C bis 285°C. Treibmittel enthaltende modifizierte Polypropylene bzw. Polypropylenmischungen ergeben verschäumte Leiterisolationen. Die Herstellung von Kabelmänteln mit Mantelschichten aus den modifizierten Polypropylenen bzw. Polypropylenmischungen erfolgt durch .Extruderbeschichtung der Einzelkabel oder verkabelten Einzelkabeln bei Schmelzetemperaturen von 200 bis 275°C.

Bei dem erfindungsgemäßen Verfahren zur Herstellung von Polyolefinbeschichtungen können die Substrate gegebenenfalls zur Erzielung einer verbesserten Haftung nach bekannten Verfahren wie Applikation von Koronaentladungen oder durch Ozon vorbehandelt werden, oder es kann zwischen Substrat und Polyolefinbeschichtung eine Haftvermittlerzwischenschicht einer Schichtdicke von 0,5 bis 20 um aus polaren Olefincopolymeren und/oder Olefinpfropfcopolymeren wie EVA-Copolymeren, Ethylen-Acrylsäure-Copolymeren, Ethylen-Methylacrylat-Copolymeren oder mit ungesättigten Carbonsäuren oder Carbonsäureanhydriden gepfropftem Polyethylen bzw. Polypropylen zwischengeschaltet sein.

Der besondere Vorteil der erfindungsgemäßen Polyolefinschaumfolien und/oder Polyolefinbeschichtungen besteht darin, daß sich auf Basis der erfindungsgemäßen Polypropylenrezepturen Polyolefinschaumfolien und/oder Polyolefinbeschichtungen herstellen lassen. die gegenüber Folien und Beschichtungen auf Basis von Polyethylen den Vorteil einer höheren Wärmeschockbeständigkeit und gegenüber Folien und Beschichtungen auf Basis üblicher Propylenpolymerer den Vorteil einer höheren Maßgenauigkeit, einer verbesserten Wärmeschockbeständigkeit und einer verbesserten Herstellbarkeit durch höhere Produktionsgeschwindigkeiten und geringere Anlagenausfälle besitzt.

Die erfindungsgemäßen Polyolefinschaumfolien und Polyolefinbeschichtungen sind bevorzugt für den Einsatz auf den Sektoren Verpackung, insbesondere für Lebensmittel-, Waschmittel- und Arzneimittelverpackung; Textil- und Bekleidungsindustrie, insbesondere für industrielle Schutzbekleidung, Sport- und Militärkleidung, Einlagestoffe und dekorative Abdeckvliese; Hygiene, insbesondere für Babywindeln, Windelhosen, Inkontinenzprodukte, Slipeinlagen und Damenbinden; Medizin, insbesondere für OP-Kleidung, Infektionsschutzkleidung, Tisch- und Bettauflagen; Bauwesen, insbesondere für Geotextilfolien, Wärme- und Schallisolation, Drainage- und Trennvliese und Dachunterspannbahnen; Fahrzeug-, Geräte- und Maschinenbau, Elektrotechnik, Elektronik, Haushaltsgeräte und Büro- und Organisationsbedarf geeignet.

Die Erfindung wird durch nachfolgende Beispiele erläutert :

### Beispiel 1

### Herstellung des modifizierten Propylenpolymeren :

In einen kontinuierlichen beheizbaren Durchlaufmischer wird ein pulverförmiges Polypropylen-Homopolymer (Schmelzindex von 0,25 g/10 min bei 230°C/2,16 kp, mittlerer Partikeldurchmesser 0,37 mm) kontinuierlich dosiert. Weiterhin werden in den Durchlaufmischer 0,35 Masse % Divinylbenzol und 0,06 Masse % 2,5-Bis(tertbutylperoxy)-2,5-dimethylhexan, jeweils bezogen auf das Polypropylen-Homopolymer, kontinuierlich dosiert. Unter homogener Durchmischung bei 45°C wird das mit den Reaktionsstoffen beladene Polypropylen-Homopolymer nach einer mittleren Verweilzeit von 13 min bei einer Temperatur von 235°C aufgeschmolzen., Nach einer Entgasungsstufe wird in den Extruder 0,1 Masse% Tetrakis[methylen(3,5-ditert.butylhydroxyhydrocinnamat)]methan und 0,1 Masse% Tris(2,4-di-tert.butylphenyl)phosphit) dosiert. Die Schmelze wird ausgetragen und granuliert.

Das resultierende modifizierte Polypropylen besitzt einen IR-spektroskopisch ermittelten Gehalt an gebundenem Divinylbenzol von 0,31 Masse % , einen Schmelzindex von 2,0 g/10 min bei 230°C/2,16 kp und einen Kristallisationspunkt (DSC) von 128.5°C.

### Herstellung der Polypropylenmischung:

Eine Mischung aus
15 Masse% eines modifizierten Polypropylens (Gehalt an Divinylbenzol 0,31 Masse %. Schmelzindex 2,0 g/10 min bei 230°C/2,16 kp, Kristallisationspunkt (DSC) 128,5°C) und
85 Masse% eines Polypropylen-Homopolymers (Typenbezeichnung Daplen D 2 XMOD, Schmelzindex 2,1 g/10 min bei 230°C/2,16 kp, Dichte 0,905 g/cm³ bei 23°C)
wird mittels eines Dosiersystems als "Dry Blend" dem Einzugstrichter eines Kiefel-70- Biasfolien-Extruders (⌀ 70 mm, 25 D, Temperaturprofil 180/210/220/240/250°C) zugeführt, aufgeschmolzen und bei 240°C durch eine Ringdüse (Durchmesser 150 mm, Spaltweite 1,2 mm) extrudiert. Die Schmelze wird nach dem Verlassen der Ringdüse mit einem Aufblasverhältnis von 1:3 aufgeblasen, mittels Luft gekühlt , durch Kalibrierkorb und Irisblende fixiert und mittels Abquetschwalzen abgezogen. Die Folie wird anschließend auf einem kombinierten Kontakt-/Zentralwickler aufgewickelt.

Die Folie kann bis zum Ausstoßmaximum der Anlage von 150 kg/h bei einer Abzugsgeschwindigkeit bis 50 m/min unter Erzielung einer stabilen Folienblase hergestelit werden Der Folienwickel ist bei 3000 Laufmeter Wickellänge kantengenau und völlig plan. Die Dickenverteilung der Folie beträgt 40 µm ± 0,5 µm. Die Folie besitzt eine Zugfestigkeit von 43 MPa, eine Reißdehnung von 350% und einen Zug-E-Modul von 1950 MPa.

Die Folie kann ohne Schwierigkeiten auf einem Beutelkonfektionsautomaten hergestellt werden. 30 min. Heißdampfexposition bei 142°C eines Folienbeutels für medizinische Anwendungen führt zu keinem Riß des Beutels, bzw. die Folie trübt nicht ein.

Eine Folienherstellung aus 100% des Polypropylen-Homopolymers (Typenbezeichnung Daplen D 2 XMOD, Schmelzindex 2,6 g/10 min bei 230°C/2,16 kp, Dichte 0,905 g/cm³ bei 23°C) auf der gleichen Blasfolienanlage ist nur bis zu einem Ausstoß von 105 kg/h und bis zu Abzugsgeschwindigkeiten bis max. 35 m/min möglich. Darüber hinaus kommt es zu Blaseninstabilitäten und zum Pumpen des Blasfolienschlauches. Die Dickenverteilung der Folie beträgt 40 ±1,9 µm bei 35 m/min. Der Folienwickel weist bei 3000 Laufmeter Falten und ein Waschbrettmuster auf, die Kanten sind verlaufen. Die Folie kann dadurch nicht für die Weiterverarbeitung auf Beutelkonfektionsanlagen verwendet werden. Die Folie weist eine Zugfestigkeit längs von 36 MPa, eine Dehnung von 560% und einen E-Modul von 1450 MPa auf.

Eine vergleichsweise aus LDPE (Typenbezeichnung Daplen 2410 F, Schmelzindex 0.75 g/10 min bei 190°C/2,16 kg, Dichte 0,923 g/cm³ bei 23°C) unter analogen Verarbeitungsbedingungen hergestellte 40 µm dicke Folie läßt sich ebenfalls mit dem Anlagenmaximum von 150 kg/h und 50 m/min verarbeiten. Bei der Beaufschlagung der Folie mit Heißdampf tritt ein sofortiges Zusammenschmelzen des Folienmaterials ein.

### Beispiel 2

### Herstellung des modifizierten Propylenpolymeren :

Im Innenmischer wird auf ein pulverförmiges Polypropylen-Homopolymer (Schmelzindex 8,0 g/10 Min. bei 230°C/2,16 kg, mittlerer Korndurchmesser 0,28 mm) o,15 Masse% 2,6-Dicyclopentyl-4-methylphenol und 0,15 Masse% Bis-2,2,6,6-tetramethyl-4-piperidylsebazat aufgetrommelt und das Gemisch durch Butadien/Stickstoff 1:12 pneumatisch in einen Kassettenreaktor o,2o x 3,5o m mit 4 integrierten Kathoden eines Niederenergiebeschleunigers vom Bandstrahlertyp (Energie 25o keV, Strahlleistung 4 x 1o KW ) und integrierter Vibrationseinrichtung gefördert, der Durchsatz bei einer Bestrahlungstemperatur von 85°C beträgt 4,6 kg/Minute.

Die resultierende modifizierte Polypropylenmischung besitzt einen Schmelzindex von 4,8 g/10 Min. bei 230°C/2,16 kg.

### Herstellung einer Chillrollfolie :

In einem Taumelmischer werden
20 Masse% einer pulverförmigen modifizierten Polypropylenmischung (Schmelzindex 4,8 g/10 Min. bei 230°C/2,16 kg),
60 Masse% eines Polypropylen-Copolymers (Typenbezeichnung Daplen KFC 2004, Schmelzindex 8,5 g/10 min bei 230°C/2,16 kp, Dichte 0,905 g/cm³ bei 23°C, Ethylengehalt 4 Mol%),
20 Masse% eines Reaktorblends (Typenbezeichnung Daplen Raheco K 2033, Ethylengehalt 33 Mol%, Schmelzindex 7,5 g/10 min bei 230°C/2,16 kg, bestehend
aus einem kristallinen Propylen-Ethylen-Copolymer und einem elastischen Ethylen-Propylen-Copolymer)
gemischt und dem Einzugstrichter einer Labor-Chill-Roll-Anlage der Fa. Erwepa aus Plastifizierextruder, Breitschlitzdüse, Saugrakel, Luftrakel, Kühlwalze I, Putzwalze, Kühlwalze II und Abzugseinheit zugeführt, im Plastifizierextruder bei einem Temperaturprofil 180/220/235/235/235°C aufgeschmolzen, bei 230°C durch die Breitschlitzdüse mit einer Düsenbreite von 650 mm extrudiert und auf der mit 20°C temperierten Kühlwalze I mittels Luftrakel angepreßt und abgekühlt, nachfolgend beschnitten, abgezogen und auf einem Zentralwickler aufgewickelt. Der "Neck-in" bei der Folien-herstellung beträgt 70 mm, d.h. die realistische Folienbreite beträgt 580 mm. Die Dickenverteilung der Chill-Roll-Folie liegt bei 50 ± 0,4µm.

Die resultierende wärmeschockbeständige 50µm-Deckelfolie besitzt eine Zugfestigkeit von 40 MPa, eine Reißdehnung von 600% und einen Zug-E-Modul von 580 MPa. Die Deckelfolie wird mit einer modifizierten Polypropylen-Tiefziehfolie zu einer Menüverpackung verschweißt und einer Heißdampfsterilisation bei 135°C/10 min unterzogen. Die Heißdampfsterilisation führt zu keiner Undichtigkeit der Menüverpackung.

Unter gleichen Bedingungen aus dem Polypropylen-Copolymer (Schmelzindex 8,5 g/10 min bei 230°C/2,16 kp, Dichte 0,905 g/cm³ bei 23°C, Ethylengehalt 4,0 Mol%) hergestellte 50 µm dicke Chill-Roll-Folien besitzen einen "Neck-in" bei der Folienherstellung von 120 mm, d.h. die realistische Folienbreite beträgt lediglich 530 mm. Die Dickenverteilung der Folie liegt bei 50 ± 1,8 µm. Unter gleichen Bedingungen hergestellte Menüverpackungen sind bei 135°C nicht heißdampfsterilisationsfähig.

### Beispiel 3

### Herstellung des modifizierten Propylenpolymeren :

In einen beheizbaren Edelstahlreaktor mit einem Volumen von 12 I, der in einer Gammabestrahlungsanlage vom Typ "Gammabeam" installiert ist, werden 2250 g eines unstabilisierten Polypropylenpulvers (Partikeldurchmesser 50 bis 750 µm, Schmelzindex 0,5 g/10 Min. bei 230°C /2,16 kp) überführt. Nach Einschaltung der Heizung wird der Edelstahlreaktor mehrfach mit Argon gespült und anschließend 18 g Vinyltriethoxysilan in den Reaktor eindosiert. Nach Aufheizung des Edelstahlreaktors auf 130°C und Positionierung der Strahlenquellen in Bestrahlungsposition wird bei einer Dosisleistung von 55 krd/Std. bestrahlt. Nach einer Bestrahlungszeit von 40 Minuten beträgt die absorbierte Gammabestrahlungsdosis 36,6 krd. Nach Absenkung der Strahlenquellen in den Quellenkontainer wird der Edelstahlreaktor auf Raumtemperatur abgekühlt und das Vinyltriethoxysilan-gepfropfte Polypropylen 1 Std. im Vacuum bei 14o°C getrocknet.

Das resultierende modifizierte Polypropylen besitzt einen IR-spektroskopisch ermittelten Gehalt an gebundenem Vinyltriethoxysilan von 0,9 % und einen Schmelzindex von 1.95 g/10 min bei 230°C/2,16 kp.

### Herstellung der Polypropylenmischung:

Eine Mischung aus
50 Masse% eines modifizierten Polypropylens (IR-spektroskopisch ermittelter Gehalt an gebundenem Vinyltriethoxysilan 0,9 %, Schmelzindex von 1,95 g/10 min bei 220°C/2,16 kp), das mit 0,04 Masse% Dibutylzinndilaurat bezogen auf das modifizierte Polypropylen beladen wurde, und
50 Masse% eines Polypropylen-Blockcopolymers (Typenbezeichnung Daplen CFC 2012, Schmelzindex 1,2 g/10 min bei 230°C/2,16 kp, Dichte 0,91 g/cm³ bei 23°C, Ethylengehalt 8,3 Masse%)
wird in einem Werner&Pfleiderer-Doppelschneckenextruder ZSK 84, Temperaturprofil 100/145/185/210/220/220/ 200/185°C, aufgeschmolzen, homogenisiert, ausgetragen und granuliert.

Das resultierende Polypropylencompound besitzt einen Schmelzindex von 1,4 g/10 min bei 230°C/2,16 kp und eine Dichte 0,91 g/cm³ bei 23°C.

### Herstellung der 1mm-Folie

In einer Technikums-Glättwerksanlage der Fa. Reifenhäuser zur Folienherstellung aus Plastifizierextruder, Breitschlitzdüse, 3-Walzenglättwerk und Abzugseinrichtung wird das Polyolefincompound im Plastifizierextruder bei einem Temperaturprofil 180/220/235/235/240°C aufgeschmolzen, bei 230°C durch die Breitschlitzdüse mit einer Düsenbreite von 800 mm extrudiert, durch die Walzen geglättet und als 1 mm-Folie abgezogen.

Aus dem "Neck-in" der Folie von 80 mm resultiert eine reale Folienbreite von 720 mm. Die bei der Herstellung im Glättspalt eingestellte Wulst von 1,5 mm ist sehr konstant und reißt nie ab. Dadurch hat die Folie eine durchgehend gleichmäßig glänzende Oberfläche. Die Dickenverteilung beträgt 1 mm ± 10 µm.

Zur Ermittlung der Wärmeschockbeständigkeit wird die Folie nach der Throne-Methode (Throne, J., "Thermoforming" S. 115-116) in einer Thermoformanlage auf 170°C erwärmt und die Zeit t ermittelt, bis die Probe 70 mm durchhängt.

Die 70mm-Marke wird bei der Folie aus dem Polyolefincompound aus 50 Masse% modifiziertem Polypropylen und 50 Masse% amorphem Propylencopolymer nach 88 s erreicht.

Eine unter gleichen Bedingungen hergestellte 1mm-Folie aus 50 Masse% nichtmodifiziertem Polypropylen und 50 Masse% amorphem Propylencopolymer besitzt einen "Neck-in" von 150 mm, die reale Folienbreite beträgt lediglich 650 mm. Der eingestellte Wulst reißt mehrmals ab und ergibt unterschiedliche Oberflächen (glänzend/matt), die Dickenverteilung der Folie beträgt 1 mm ± 21 µm. Die Ermittlung der Wärmeschockbeständigkeit nach der Throne-Methode ergibt ein Durchhängen der Folie bis zur 70mm-Marke bereits nach 58 s.

### Beispiel 4

### Herstellung des modifizierten Propylenpolymeren

In einen kontinuierlichen beheizbaren Durchlaufmischer wird ein pulverförmiges Polypropylen-Homopolymer (Schmelzindex 0,2 g/10 min bei 230°C/2,16 kp, mittlerer Partikeldurchmesser 0,55 mm) kontinuierlich dosiert. Weiterhin werden in den Durchlaufmischer 0,1 Masse % Calciumstearat und 0,3 Masse % Bis(tert.butylperoxy)-2,5-dimethylhexan, jeweils bezogen auf das Polypropylen-Homopolymer, kontinuierlich dosiert. Unter homogener Durchmischung bei 45°C wird das mit thermisch zerfallendem Radikalbildner und Hilfsstoff beladene Polypropylen-Homopolymer bei einer Verweilzeit von 6 min bei 45°C durch ein Butadien-Stickstoff-Gemisch mit 0.5 Masse % Butadien, bezogen auf das Polypropylen-Homopolymer, sorptiv beladen. Nach Überführung in einen Doppelschneckenextruder wird das pulverförmige Reaktionsgemisch in Kontakt mit dem eindosierten Butadien-Stickstoff-Gemisch unter Zusatz von 0,1 Masse% Tetrakis[methylen(3,5-di-tert.butylhydroxyhydrocinnamat)]methan, 0,1 Masse% Tris(2,4-di-tert.butylphenyl)-phosphit) und 0.1 Masse% Pentaerythrityl-tetrakis-3-(3,5-di-tert.butyl-4-hydroxyphenyl)propionat bei einer Massetemperatur von 235°C aufgeschmolzen, nach einer Grobentgasung unter Eindosierung von Wasser als Schleppmittel einer Feinentgasung unterzogen, ausgetragen und granuliert.

Das resultierende modifizierte Polypropylen besitzt einen IR-spektroskopisch ermittelten Gehalt an gebundenem Butadien von 0,15 Masse % , einen Schmelzindex von 2.7 g/10 min bei 230°C/2,16 kp und einen Kristallisationspunkt (DSC) von 127,2 °C .

### Herstellung der Polypropylenmischung und der Polyolefinschaumfolie :

Eine Mischung aus
90 Masse% eines modifizierten Polypropylens (IR-spektroskopisch ermittelter Gehalt an gebundenem Butadien 0,15 Masse %, Schmelzindex 2,7 g/10 min bei 230°C/2,16 kp)
10 Masse% eines Propylen-Blockcopolymers (Typenbezeichnung Daplen DSC 1012, Ethylengehalt 8,3 Masse%, Schmelzindex 3 g/10 min bei 230°C/2,16 kg),
und
0.15 Masse%, bezogen auf die Summe der Polyolefine, eines Treibmittelgemischs auf Basis Bicarbonat/Zitronensäure
wird mittels eines Dosiersystems als Dry Blend dem Einzugstrichter eines Einschneckenextruders mit 90 mm Schneckendurchmesser, L/D=35 und Temperaturprofil 200/230/230/190/160/160/160/160/160/160 zugeführt. Dabei wird die Mischung zunächst aufgeschmolzen und homogenisiert, bevor nach ca. 16 D über eine spezielle Dosiereinheit Butan in die Schmelze eingespritzt (1,5 kg/h) und anschließend im Extruder intensiv eingemischt und homogen verteilt wird. Nachfolgend wird die Schmelze auf Schäumtemperatur herabgekühlt, über eine Schmelzepumpe in eine Ringdüse überführt und über einen Kalibrierdorn mit innerer Luftkühlung als Schaumfolienschlauch abgezogen, aufgeschnitten, flachgelegt und aufgewickelt.

Die resultierende Schaumfolie mit einer Dicke von 1,2 mm und einer Dichte von 265 kg/m³ hat eine feinzellige, geschlossenzellige Schaumstruktur. Der an dieser Folie gemessene Zug-E-Modul beträgt in Längsrichtung 289 MPa und in Querrichtung 252 MPa, die zugehörige Streckspannung beträgt 7,2 MPa (längs) bzw. 6,3 MPa (quer). Nach einer Heißdampfexposition ( 140°C, 5 min) steigen die Dichte auf 25 kg/m³ und die Zug-E-Moduli auf 310 MPa (längs) und 270 MPa (quer) an. Ohne Verwendung des modifizierten Polypropylens, d.h. bei alleinigem Einsatz von nichtmodifizierten Polypropylenen konnten keine maßhaltigen, geschlossenzelligen Schaumfolien hergestellt werden. Bei Austritt der gasbeladenen Schmelze aus der Düse gelang es trotz intensiver Kühlung nicht, die Koaleszenz der Schaumzellen zu verhindern und eine geschlossenzellige Schaumstruktur zu erhalten, zu stabilisieren und als geschäumte Schlauchfolie über den Kühldorn abzuziehen.

Nichtvernetzte, thermoformbare PE-Schaumfolien vergleichbarer Dichte schmelzen bei oben angeführter Heißdampfexposition auf Grund ihres gegenüber Polypropylen deutlich niedrigeren Schmelzpunktes.

### Beispiel 5

### Herstellung des modifizierten Propylenpolymeren :

In einem diskontinuierlichen beheizbaren Schnellmischer wird einem pulverförmigen statistischen Polypropylen-Copolymer (Schmelzindex von 0,25 g/10 min bei 230°C/2.16 kp, mittlerer Partikeldurchmesser 0,0,42 mm) 0,05 Masse % Hydrotalcit, 0,05 Masse % Calciumstearat und 0,275 Masse % tert.-Butylperoxybenzoat und 0,2 Masse% Divinylbenzol, jeweils bezogen auf das Polypropylen-Copolymer, zudosiert. Die Modifizierungsreaktion wird bei 140°C über eine Dauer von 120 min unter intensiver Durchmischung des beladenen Polypropylen-Copolymer-Pulvers durchgeführt.. Nach Zusatz von 0,2 Masse% Irganox B225 wird das modifizierte Polypropylen-Copolymer in den Doppelschneckenextruder überführt, bei einer Massetemperatur von 235°C aufgeschmolzen, ausgetragen und granuliert.

Das resultierende modifizierte Polypropylen besitzt einen IR-spektroskopisch ermittelten Gehalt an gebundenem Divinylbenzen von 0,19 Masse % und einen Schmelzindex von 1,7 g/10 min bei 230°C/2,16 kg.

### Herstellung der Extrusionsbeschichtung

Ein Dry-Blend aus
85 Masse% eines heterophasischen statistischen Propylen-Ethylen-Copolymers (Schmelzindex 25,5 g/10 min bei 230°C/2,16 kg) und
15 Masse% eines modifizierten Polypropylens (Gehalt an gebundenem Divinylbenzen 0,19 Masse %, Schmelzindex 1,7 g/10 min bei 230°C/2,16 kg)
wird in den Einzugstrichter des Plastifizierextruders ( Schnecken-⌀ 120 mm, 30D, Temperaturprofil 190/210/220/220/230/230/230/230/230/230/230/230/230/230°C) dosiert, aufgeschmolzen, homogenisiert und bei einem Ausstoß von 140 kg/h durch die Breitschlitzdüse (b=1700 mm) auf ein Polypropylenvlies einer Flächenmasse von 17 g/m² bei einer Geschwindigkeit von 300 m/min beschichtet.
Der "Neck-in" der Beschichtung beträgt 60 mm, d.h. die reale Beschichtungsbreite beträgt 1640 mm, die Schichtdicke der Beschichtung beträgt 5 µm ± 0,3 µm, die Beschichtung enthält 0 Löcher/m².

Wird unter gleichen Verarbeitungsbedingungen ein "Dry Blend" aus
100 Masse% eines heterophasischen statistischen Propylen-Ethylen-Copolymers (Schmelzindex 5.5 g/10 min bei 230°C/2,16 kg) sowie 0,1 Masse% Tetrakis[methylen(3,5-di-tert.butylhydroxyhydrocinnamat)]methan und 0,1 Masse% Tris-(2,4-di-tert.butylphenyl)phosphit, jeweils bezogen auf das Propylen-Ethylen-Copolymer, zur Herstellung der Vliesbeschichtung eingesetzt, so läßt sich lediglich eine Beschichtungsgeschwindigkeit von maximal 200 m/min erzielen. Der "Neck-in" der Beschichtung beträgt 160 mm, d.h. die reale Beschichtungsbreite beträgt 1540 mm, die Schichtdicke der Beschichtung beträgt 5 µm ± 0,9 µm, die Beschichtung enthält bei einer Beschichtungsgeschwindigkeit von 150 m/min 0 Löcher/m² und bei einer Beschichtungsgeschwindigkeit von 200 m/min 3-5 Löcher/m².

## Patentansprüche

1. Polyolefinschaumfolien und/oder Polyolefinbeschichtungen von textilen Flächengebilden, Kunststofffolien, Papier, Karton und Metall mit hoher Maßgenauigkeit und Wärmeschockbeständigkeit, wobei die Polyolefinschaumfolien und/oder Polyolefinbeschichtungen aus modifizierten Polypropylenen, die 5 bis 50 Masse%, im Gemisch mit nichtmodifizierten Polypropylenen vorliegen, und wobei die nichtmodifizierten Polypropylene, bevorzugt 95 bis 50 Masse%, aus
1) üblichen Propylenpolymeren, bevorzugt unter Anwendung von Ziegler-Natta-Katalysatoren oder Metallocenkatalysatoren hergestellten Propylenhomopolymeren und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230°C/2,16 kg, bevorzugt 1 bis 100 g/10 min bei 230°C/ 2,16 kg, und/oder
2) einer Polyolefinmischung mit einem M_{w}/Mₙ-Verhältnis von 2 bis 6 und einem Schmelzindex von 1 bis 40 g/10 min bei 230°C/2,16 kp, die aus
2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂ =CHR, wobei R ein linearer oder verzweigter Alkylrest mit 2 bis 8 Kohlenstoffatomen ist,
2.2) 2 bis 40 Masse% eines elastischen Copolymers aus 20 bis 70 Masse% Ethylen und 80 bis 30 Masse% Propylen und/oder einem α-Olefin der allgemeinen Formel CH₂ = CHR, wobei R ein linearer oder verzweigter Alkylrest mit 2 bis 8 Kohlenstoffatomen ist, besteht und/oder
3) weitgehend amorphen Polypropylenen oder Propylen-Copolymeren mit einem Anteil an kristallinem Polypropylen bzw. kristallinem Propylen-Copolymer unter 10 Masse%, einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂ = CHR ist, wobei R ein linearer oder verzweigter Alkylrest mit 2 bis 8 Kohlenstoffatomen ist, und/oder
4) nichtisotaktischen Propylen-Homopolymeren mit einem Schmelzpunkt von 145 bis 165°C, einer Schmelzviscosität über 200000 cps bei190°C, einer Kristallisationswärme von 4 bis 10 cal/g und einem löslichen Anteil in Diethylether von 35 Masse% bis 55 Masse%, bestehen,
wobei die Polypropylene 0,01 bis 2,5 Masse% Stabilisatoren, 0,01 bis 1 Masse% Verarbeitungshilfsmittel und gegebenenfalls 0,1 bis 1 Masse% Antistatika, 0,2 bis 3 Masse% Pigmente, 0,05 bis 1 Masse% Nukleierungsmittel, 2 bis 20 Masse% Flammschutzmittel, jeweils bezogen auf die Summe der Polypropylene, als Hilfsstoffe, und/oder gegebenenfalls 10 bis 70 Masse%, bevorzugt 20 bis 50 Masse%, bezogen auf die Summe der Polypropylene, anorganische und/oder organische Füll- und/oder Verstärkungsstoffe enthalten, **dadurch gekennzeichnet, dass** die modifizierten Polypropylene modifizierte Propylenpolymere mit Schmelzindices von 0,1 bis 50 g/10 min bei 230°C/2,16 kg, bevorzugt 1 bis 40 g/10 min bei 230°C/2,16 kg, und einem Quotienten aus der Grenzviscosität des modifizierten Polypropylens und der Grenzviscosität des nichtmodifizierten Polypropylens mit weitgehend gleichem Molmassen-Gewichtsmittel von 0,20 bis 0,95 sind und a) durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren in Gegenwart ionisierender Strahlung bzw. thermisch zerfallenden Radikalbildnern, oder
b) durch Umsetzung von funktionalisierten Polypropylenen, bevorzugt von Säureund/oder Säureanhydridgruppen enthaltenden Polypropylenen, mit mehrfunktionellen Verbindungen entgegengesetzter Reaktivität, bevorzugt mit C₂- bis C₁₆- Diaminen und/ oder C₂- bis C₁₆-Diolen, oder
c) durch hydrolytische Kondensation von Polypropylenen, die hydrolysierbare Silangruppen enthalten,
hergestellt worden sind.

2. Polyolefinschaumfolien und/oder Polyolefinbeschichtungen nach Anspruch 1,
**dadurch gekennzeichnet, dass** die modifizierten Propylenpolymere durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren in Gegenwart thermisch zerfallender Radikalbildner nach einem kontinuierlichen Verfahren hergestellt worden sind, bei dem
1) Polypropylenpartikel in Form von Pulvern, Granulaten oder Grießen mit einer bevorzugten Korngröße im Bereich von 0,001 bis 7 mm, die aus
1.1) Propylen-Homopolymeren, insbesondere aus Propylen-Homopolymeren mit bimodaler Molmassenverteilung, Molmassen-Gewichtsmitteln M_{w} von 500000 bis 1500000 g/mol,
Molmassen-Zahlenmitteln Mₙ von 25000 bis 100000 g/mol und M_{w}/Mₙ -Werten von 5 bis 60, die in einer Reaktorkaskade unter Einsatz von Ziegler-Natta-Katalysatoren oder Metallocenkatalysatoren hergestellt wurden, und/oder aus
1.2) Copolymeren aus Propylen und Ethylen bzw. α-Olefinen mit 4 bis 18 C-Atomen, bevorzugt aus statistischen Propylen-Copolymeren, Propylen-Blockcopolymeren, statistischen Propylen-Blockcopolymeren und/oder elastomeren Polypropylenen, oder aus Mischungen der genannten modifizierten Polypropylene, bestehen, in einem kontinuierlichen Mischer mit 0,05 bis 3 Masse%, bezogen auf die eingesetzten Polypropylene, an Acylperoxiden, Alkylperoxiden, Hydroperoxiden Peroxycarbonaten und/oder Perestern als thermisch zerfallende Radikalbildner, deren thermischer Zerfall bevorzugt unterhalb 210°C abgeschlossen ist und die gegebenenfalls mit inerten Lösungsmitteln verdünnt sind, unter Erwärmung auf 30 bis 100°C, bevorzugt auf 70 bis 90°C, gemischt worden sind,
2) leichtflüchtige bifunktionelle Monomere, insbesondere C₄-bis C₁₀-Diene und/oder C₇- bis C₁₀- Divinylverbindungen, durch die Polypropylenpartikel aus der Gasphase, bevorzugt in kontinuierlichen Durchftussmischern als kontinuierliche Gas-Feststoff-Absorber, bei einer Temperatur T von 20°C bis 120°C, vorzugsweise von 60 bis 100°C, und einer mittleren Sorptionszeit von τₛ von 10s bis 1000 s, bevorzugt 60 s bis 600 s, sorbiert worden sind, wobei in den Polypropylenpartikeln der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
3) die Polypropylenpartikel, in denen die Acylperoxide, Alkylperoxide, Hydroperoxide, Peroxycarbonate und/oder Perester als thermisch zerfallende Radikalbildner und die bifunktionell ungesättigten Monomere sorbiert worden sind, unter einer Atmosphäre aus Inertgas und diesen leichtflüchtigen bifunktionellen Monomeren bei 110°C bis 210°C in kontinuierlich arbeitenden Knetem oder Extrudern, vorzugsweise in Doppelschneckenextrudem, aufgeschmolzen worden sind und die thermisch zerfallenden Radikalbildner dabei zersetzt worden sind,
4) die Schmelze danach auf 220°C bis 300°C erwärmt worden ist, wobei nichtumgesetzte Monomere und Zerfallsprodukte entfernt worden sind, und
5) die Schmelze in an sich bekannter Weise granuliert worden ist, und bei dem vor dem Verfahrensschritt 1) und/oder 5) und/oder vor bzw. während des Verfahrensschrittes 3) und/oder 4) als weitere Hilfsstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel und/oder 0,01 bis 5 Masse% Verarbeitungshilfsmittel, bezogen auf das eingesetzte Polypropylen, zugesetzt worden sind.

3. , Polyolefinschaumfolien und/oder Polyolefinbeschichtungen nach einem oder mehreren der Ansprüche 1 und 2, **dadurch gekennzeichnet, dass** die Polyolefinschaumfolien mit chemischen bzw. physikalischen Treibmitteln geschäumte Polyolefinfolien sind, und dass die Polyolefinbeschichtungen
a) nach dem Kalanderverfahren hergestellte Polyolefinbeschichtungen
b) nach dem Chill-Roll-Verfahren hergestellte Polyolefinbeschichtungen
c) nach dem Glättwerkverfahren hergestellte Polyolefinbeschichtungen
d) nach dem Extrusionsbeschichtungsverfahren hergestellte Polyolefinbeschichtungen
e) nach dem Rohrbeschichtungsverfahren hergestellte Polyolefinbeschichtungen
f) nach dem Kabelummantelungsverfahren hergestellte Polyolefinbeschichtungen sind.

4. Polyolefinschaumfolien und/oder Polyolefinbeschichtungen nach Anspruch 3,
**dadurch gekennzeichnet, dass** die Polypropylene in den nach dem
Kalanderverfahren hergestellten Polyolefinbeschichtungen aus 5 bis 50 Masse% modifizierten Polypropylenen mit Schmelzindices von 0,25 bis 8 g/10 min bei 230°C/2,16 kg und 95 bis 50 Masse% nichtmodifizierten Polypropylenen mit Schmelzindices von 0,25 bis 20 g/10 min bei 230°C/2,16 kg, bevorzugt Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, und/oder den nichtmodifizierten Polypropylenen 2), 3) und/oder 4), bestehen.

5. Polyolefinschaumfolien und/oder Polyolefinbeschichtungen nach Anspruch 3,
**dadurch gekennzeichnet, dass** die Polypropylene in den nach dem Chill-Roll-Verfahren hergestellten Polyolefinbeschichtungen aus 5 bis 30 Masse% modifizierten Polypropylenen mit Schmelzindices von 1 bis 30 g/10 min bei 230°C/2,16 kg und 95 bis 70 Masse% nichtmodifizierten Polypropylenen mit Schmelzindices von 1 bis 40 g/10 min bei 230°C/2,16 kg bestehen.

6. Polyolefinschaumfolien und/oder Polyolefinbeschichtungen nach Anspruch 3,
**dadurch gekennzeichnet, dass** die Polypropylene in den nach dem
Glättwerkverfahren hergestellten Polyolefinbeschichtungen aus 5 bis 30 Masse% modifizierten Polypropylenen mit Schmelzindices von 0,25 bis 15 g/10 min bei 230°C/2,16 kg und 95 bis 70 Masse% nichtmodifizierten Polypropylenen mit Schmelzindices von 0,25 bis 20 g/10 min bei 230°C/2,16 kg bestehen.

7. Polyolefinschaumfolien und/oder Polyolefinbeschichtungen nach Anspruch 3,
**dadurch gekennzeichnet, dass** die Polypropylene in den mit physikalischen und/oder chemischen Treibmitteln geschäumten Polyolefinfolien aus 5 bis 100 Masse% modifizierten Polypropylenen mit Schmelzindices von 0,25 bis 12 g/10 min bei 230°C/2,16 kg und 0 bis 95 Masse% nichtmodifizierten Polypropylenen mit Schmelzindices von 0,25 bis 12 g/10 min bei 230°C/2,16 kg bestehen.

8. Polyolefinschaumfolien und/oder Polyolefinbeschichtungen nach Anspruch 3,
**dadurch gekennzeichnet, dass** die Polypropylene in den nach dem Extrusionsbeschichtungsverfahren hergestellten Polyolefinbeschichtungen aus 5 bis 30 Masse% modifizierten Polypropylenen mit Schmelzindices von 1 bis 50 g/10 min bei 230°C/2,16 kg und 95 bis 70 Masse% nichtmodifizierten Polypropylenen mit Schmelzindices von 2 bis 100 g/10 min bei 230°C/2,16 kg, bevorzugt Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, und/oder den nichtmodifizierten Polypropylenen 2), 3) und/oder 4), bestehen.

9. Verfahren zur Herstellung von Polyolefinschaumfolien und/oder Polyolefinbeschichtungen von Substraten wie textilen Flächengebilden, Kunststofffolien, Papier, Karton und Metall mit hoher Maßgenauigkeit und Wärmeschockbeständigkeit durch Aufschmelzen der Polyolefine in kontinuierlichen Knetern, bevorzugt in Extrudern mit UD von 20 bis 40, bei Temperaturen von 160 bis 320°C, Homogenisierung und
a) Aufgeben als Schmelze auf ein Mischwalzwerk und/oder auf einen Kalander, Abkühlen, Beschneiden und Aufwickeln der Folie; Aufkaschieren auf Flächenbahnen aus Metallfolien, Kunststofffolien, Papierbahnen oder Textilbahnen, gegebenenfalls unter Zwischenschaltung einer Haftvermittlerschicht, und Aufwickeln der Mehrkomponentenverbunde,
oder
b) Austragen über eine Breitschlitzdüse, Aufbringen auf eine Chill-Roll-Anlage und Abziehen als Folie, Beschneiden und Aufwickeln, oder bei Chill-Roll-Anlagen mit mehreren Extrudern Abziehen als Coextrusionsfolie, Beschneiden und Aufwickeln; Aufkaschieren bzw. Direktbeschichten auf Flächenbahnen aus Metallfolien, Kunststofffolien,
Papierbahnen oder Textilbahnen, gegebenenfalls unter Zwischenschaltung einer Haftvermittlerschicht, und Aufwickeln der Mehrkomponentenverbunde, oder
c) Aufkaschieren auf Flächenbahnen aus Metallfolien, Kunststofffolien, Papierbahnen oder Textilbahnen, gegebenenfalls unter Zwischenschaltung einer Haftvermittlerschicht, und Aufwickeln der Mehrkomponentenverbunde, oder
d) nach Eindosierung von Treibmitteln Austragen über eine Breitschlitzdüse auf ein Glättwerk oder auf eine Chill-Roll-Anlage, Abziehen als geschäumte Folie, Beschneiden und Aufwickeln; oder Austragen über eine Ringdüse, gegebenenfalls Kühlen unter Einpressen von Luft und Abziehen über einen Kalibrierdorn, gegebenenfalls mit innerer Luftkühlung, als Schaumfolienschlauch, Aufschneiden, Flachlegen und Aufwickeln, oder
e) Austragen des Schmelzefilms nach dem Extrusionsbeschichtungsverfahren direkt auf die Flächenbahnen aus Metallfolien, Kunststofffolien, Papierbahnen oder Textilbahnen, gegebenenfalls unter Zwischenschaltung einer Haftvermittlerschicht, und Aufwickeln der Mehrkomponentenverbunde, oder
f) Austragen über eine Breitschlitzdüse einer Rohrbeschichtungsanlage und schmelzflüssig Aufsiegeln auf das rotierende Rohr, gegebenenfalls unter Zwischenschaltung einer Haftvermittterschicht, wobei die Polyolefine aus modifizierten Polypropylenen, die 5 bis 50 Masse%, im Gemisch mit nichtmodifizierten Polypropylenen vorliegen, und wobei die nichtmodifizierten Polypropylene, bevorzugt 95 bis 50 Masse%, aus
1) üblichen Propylenpolymeren, bevorzugt unter Anwendung von Ziegler-Natta-Katalysatoren oder Metallocenkatalysatoren hergestellten Propylenhomopolymeren und/oder Copolymeren aus Propylen, Ethylen und/oder α-Olefinen mit 4 bis 18 C-Atomen mit einem Propylengehalt von 80,0 bis 99,9 Masse% in Form von statistischen Copolymeren, Blockcopolymeren und/oder statistischen Blockcopolymeren, mit Schmelzindices von 0,1 bis 300 g/10 min bei 230°C/2,16 kg, bevorzugt 1 bis 100 g/10 min bei 230°C/2,16 kg, und/oder
2) einer Polyolefinmischung mit einem M_{w}/Mₙ-Verhältnis von 2 bis 6 und einem Schmelzindex von 1 bis 40 g/10 min bei 230°C/2,16 kp, die aus 2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂ = CHR, wobei R ein linearer oder verzweigter Alkylrest mit 2 bis 8 Kohlenstoffatomen ist 2.2) 2 bis 40 Masse% eines elastischen Copolymers aus 20 bis 70 Masse% Ethylen und 80 bis 30 Masse% Propylen und/oder einem α-Olefin der allgemeinen Formel CH₂ = CHR, wobei R ein linearer oder verzweigter Alkylrest mit 2 bis 8 Kohlenstoffatomen ist, besteht
und/oder
3) weitgehend amorphen Polypropylenen oder Propylen-Copolymeren mit einem Anteil an kristallinem Polypropylen bzw. kristallinem Propylen-Copolymer unter 10 Masse%, einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂ = CHR ist, wobei R ein linearer oder verzweigter Alkylrest mit 2 bis 8 Kohlenstoffatomen ist, und/ oder
4) nichtisotaktischen Propylen-Homopolymeren mit einem Schmelzpunkt von 145 bis 165°C, einer Schmelzviscosität über 200000 cps bei190°C, einer Kristallisationswärme von 4 bis 10 cal/g und einem löslichen Anteil in Diethylether von 35 Masse% bis 55 Masse%, bestehen,
wobei den Polyolefinen 0,01 bis 2,5 Masse% Stabilisatoren, 0,01 bis 1 Masse% Verarbeitungshilfsmittel und gegebenenfalls 0,1 bis 1 Masse% Antistatika, 0,2 bis 3 Masse% Pigmente, 0,05 bis 1 Masse% Nukleierungsmittel, 2 bis 20 Masse% Flammschutzmittel, jeweils bezogen auf die Summe der Polyolefine, als Hilfsstoffe, und/oder gegebenenfalls 10 bis 70 Masse%, bevorzugt 20 bis 50 Masse%, bezogen auf die Summe der Polyolefine, anorganische und/oder organische Füll- und/oder Verstärkungsstoffe zugesetzt werden, **dadurch gekennzeichnet, dass** die modifizierten Polypropylene modifizierte Propylenpolymere mit Schmelzindices von 0,1 bis 50 g/10 min bei 230°C/2,16 kg, bevorzugt 1 bis 40 g/10 min bei 230°C/2,16 kg, und einem Quotienten aus der Grenzviscosität des modifizierten Polypropylens und der Grenzviscosität des nichtmodifizierten Polypropylens mit weitgehend gleichem Molmassen-Gewichtsmittel von 0,20 bis 0,95 sind und
a) durch Behandlung von Propylen-Homopolymeren und/oder Copolymeren aus Propylen und Ethylen bzw. α-Olefinen mit 4 bis 18 C-Atomen sowie von Mischungen der genannten Polypropylene mit mehrfunktionell ethylenisch ungesättigten Monomeren in Gegenwart ionisierender Strahlung bzw. thermisch zerfallenden Radikalbildnern, oder
b) durch Umsetzung von funktionalisierten Polypropylenen, bevorzugt von Säureund/oder Säureanhydridgruppen enthaltenden Polypropylenen, mit mehrfunktionellen Verbindungen entgegengesetzter Reaktivität, bevorzugt mit C₂- bis C₁₆ - Diaminen und/ oder C₂- bis C₁₆-Diolen, oder
c) durch hydrolytische Kondensation von Polypropylenen, die hydrolysierbare Silangruppen enthalten,
hergestellt worden sind.

10. Verwendung von Polyolefinschaumfolien und Polyolefinbeschichtungen nach einem oder mehreren der Ansprüche 1 bis 8 auf den Sektoren Verpackung, insbesondere für Lebensmittel-, Waschmittel- und Arzneimittelverpackung; Textil- und Bekleidungsindustrie, insbesondere für industrielle Schutzbekleidung, Sport- und Militärkleidung, Einlagestoffe und dekorative Abdeckvliese; Hygieneindustrie, insbesondere für Babywindeln, Windelhosen, Inkontinenzprodukte, Slipeinlagen und Damenbinden; Medizin, insbesondere für OP-Kleidung, Infektionsschutzkleidung, Tisch- und Bettauflagen; Bauwesen, insbesondere für Geotextilfolien, Wärme- und Schallisolation, Drainage- und Trennvliese und Dachunterspannbahnen; Fahrzeug-, Geräte- und Maschinenbau, Elektrotechnik, Elektronik, Transportsysteme und Transportverpackung, Haushaltsgeräte und Büro- und Organisationsbedarf.

## Claims

1. Polyolefin expanded sheets and/or polyolefin coatings of fabrics, plastic sheets, paper, cardboard and metal which have a high dimensional accuracy and thermal shock resistivity, wherein the polyolefin expanded sheets and/or polyolefin coatings consist of modified polypropylenes present in an amount of 5 to 50 % by weight in the mixture with unmodified polypropylenes and wherein the unmodified polypropylenes, preferably 95 to 50 % by weight, consist of
1) usual propylene polymers, preferably propylene homopolymers manufactured by using Ziegler-Natta catalysts or metallocene catalysts and/or copolymers of propylene, ethylene and/or α-olefins having 4 to 18 C-atoms, which have a propylene content of 80.0 to 99.9 % by weight, in the form of random copolymers, block copolymers and/or random block copolymers, which have melt indices of 0.1 to 300 g/10 min at 230 °C/2.16 kg, preferably 1 to 100 g/10 min at 230 °C/2.16 kg; and/or
2) a polyolefin mixture having an M_{w}/Mₙ ratio of 2 to 6 and a melt index of 1 to 40 g/10 min at 230 °C/2.16 kg which consists of
2.1) 60 to 98 % by weight of a crystalline copolymer of 85 to 99.5 % by weight of propylene and 15 to 0.5 % by weight of ethylene and/or an α-olefin of the general formula CH₂=CHR, where R is a linear or branched alkyl residue having 2 to 8 carbon atoms;
2.2) 2 to 40 % by weight of an elastic copolymer consisting of 20 to 70 % by weight of ethylene and 80 to 30 % by weight of propylene and/or an α-olefin of the general formula CH₂=CHR, where R is a linear or branched alkyl residue having 2 to 8 carbon atoms; and/or
3) substantially amorphous polypropylenes or propylene copolymers having a content of crystalline polypropylene or crystalline propylene copolymer of less than 10 % by weight, an enthalpy of melting of less than 40 J/g and a melt index of 0.1 to 100 g/10 min at 230 °C/2.16 kg, the substantially amorphous polypropylene being a homopolymer of the propylene and/or a copolymer of the propylene which consists of at least 80 mole % of propylene and not more than 20 mole % of one or more α-olefins of the general formula CH₂=CHR, where R is a linear or branched alkyl residue having 2 to 8 carbon atoms; and/or
4) non-isotactic propylene homopolymers having a melting point of 145 to 165 °C, a melting viscosity of more than 200,000 cps at 190 °C, a heat of crystallization of 4 to 10 cal/g and a content soluble in diethyl ether of 35 to 55 % by weight,
wherein the polypropylenes contain 0.01 to 2.5 % by weight of stabilizers, 0.01 to 1 % by weight of processing agents and, if required, 0.1 to 1 % by weight of antistatics, 0.2 to 3 % by weight of pigments, 0.05 to 1 % by weight of nucleation agents, 2 to 20 % by weight of flameproofing agents, each related to the sum of the polypropylenes, as auxiliary agents, and/or contain, if required, 10 to 70 % by weight, preferably 20 to 50 % by weight, related to the sum of the polypropylenes, of inorganic and/or organic filling and/or reinforcing agents,
**characterized in that** the modified polypropylenes are modified propylene polymers having melt indices of 0.1 to 50 g/10 min at 230 °C/2.16 kg, preferably 1 to 40 g/10 min at 230 °C/2.16 kg, and a quotient of the intrinsic viscosity of the modified polypropylene and of the intrinsic viscosity of the unmodified polypropylene having substantially the same molar-mass weight average, of 0.20 to 0.95, and that the modified polypropylenes have been manufactured
a) by treating propylene homopolymers and/or copolymers of propylene and ethylene or α-olefins having 4 to 18 C-atoms as well as mixtures of the above polypropylenes with polyfunctionally ethylenically unsaturated monomers in the presence of ionizing radiation or thermally decomposing radical formers; or
b) by converting functionalized polypropylenes, preferably polypropylenes containing acid residues and/or acid anhydride residues, with polyfunctional compounds of opposite reactivity, preferably with C₂- to C₁₆-diamines and/or C₂- to C₁₆-diols; or
c) by hydrolytically condensing polypropylenes containing hydrolysable silane groups.

2. The polyolefin expanded sheets and/or polyolefin coatings of Claim 1, wherein the modified propylene polymers have been manufactured by treating propylene homopolymers and/or copolymers of propylene and ethylene or α-olefins having 4 to 18 C-atoms as well as mixtures of the above polypropylenes with polyfunctionally ethylenically unsaturated monomers in the presence of thermally decomposing radical formers by a continuous process in which
1) polypropylene particles in the form of powders, granulates or grits having a preferred particle size ranging from 0.001 to 7 mm, which consist of
1.1) propylene homopolymers, specifically of propylene homopolymers having a bimodal molar-mass distribution, molar-mass weight averages M_{w} of 500,000 to 1,500,000 g/mole, molar-mass numerical averages Mₙ of 25,000 to 100,000 g/mole and M_{w}/Mₙ values of 5 to 60, which were manufactured by the use of Ziegler-Natta catalysts or metallocene catalysts in a series of reactors; and/or consist of
1.2) copolymers of propylene and ethylene or α-olefins having 4 to 18 C-atoms, preferably of random propylene copolymers, propylene block copolymers, random propylene block copolymers and/or elastomeric polypropylenes, or of mixtures of the above modified polypropylenes, have been mixed in a continuous mixer with 0.05 to 3 % by weight, related to the polypropylenes charged, of acyl peroxides, alkyl peroxides, hydroperoxides, peroxycarbonates and/or peresters as thermally decomposing radical formers whose thermal decomposition is completed preferably below 210 °C and which have been diluted with inert solvents if required, while heating to 30 to 100 °C, preferably 70 to 90 °C;
2) highly volatile bifunctional monomers, specifically C₄- to C₁₀-dienes and/or C₇- to C₁₀-divinyl compounds, have been sorbed by the polypropylene particles from the gas phase, preferably in continuous tank-type flow reactors as continuous gas-solid absorbers, at a temperature T of 20 to 120 °C, preferably 60 to 100 °C, and a mean sorption time τₛ of 10 to 1000 sec, preferably 60 to 600 sec, the content of the bifunctionally unsaturated monomers in the polypropylene particles being 0.01 to 10 % by weight, preferably 0.05 to 2 % by weight, related to the polypropylenes charged; subsequently
3) the polypropylene particles in which the acyl peroxides, alkyl peroxides, hydroperoxides, peroxycarbonates and/or peresters as thermally decomposing radical formers and the bifunctionally unsaturated monomers had been sorbed have been melted in an atmosphere of inert gas and of said highly volatile bifunctional monomers at 110 to 210 °C in continuous kneaders or extruders, preferably in twinscrew extruders, and the thermally decomposing radical formers have been decomposed at the same time;
4) the melt has subsequently been heated to 220 to 300 °C, unreacted monomers and decomposition products having been removed; and
5) the melt has been granulated in a manner known per se; and in which 0.01 to 2.5 % by weight of stabilizers, 0.1 to 1 % by weight of antistatics, 0.2 to 3 % by weight of pigments, 0.05 to 1 % by weight of nucleation agents and/or 0.01 to 5 % by weight of processing agents, related to the polypropylene charged, have been added as further auxiliary agents before process step 1) and/or 5) and/or before or during process step 3) and/or 4).

3. The polyolefin expanded sheets and/or polyolefin coatings of one or more of Claims 1 and 2, wherein the polyolefin expanded sheets are polyolefin sheets expanded with chemical or physical expanding agents and wherein the polyolefin coatings are
a) polyolefin coatings manufactured by the calender process;
b) polyolefin coatings manufactured by the chill-roll extrusion process;
c) polyolefin coatings manufactured by the glazing roller process;
d) polyolefin coatings manufactured by the extrusion coating process;
e) polyolefin coatings manufactured by the pipe coating process;
f) polyolefin coatings manufactured by the cable sheathing process.

4. The polyolefin expanded sheets and/or polyolefin coatings of Claim 3, wherein the polypropylenes in the polyolefin coatings manufactured by the calender process consist of 5 to 50 % by weight of modified polypropylenes having melt indices of 0.25 to 8 g/10 min at 230 °C/2.16 kg and of 95 to 50 % by weight of unmodified polypropylenes having melt indices of 0.25 to 20 g/10 min at 230 °C/2.16 kg, preferably copolymers of propylene, ethylene and/or α-olefins having 4 to 18 C-atoms, which have a propylene content of 80.0 to 99.9 % by weight, in the form of random copolymers, block copolymers and/or random block copolymers, and/or the unmodified polypropylenes 2), 3) and/or 4).

5. The polyolefin expanded sheets and/or polyolefin coatings of Claim 3, wherein the polypropylenes in the polyolefin coatings manufactured by the chill-roll extrusion process consist of 5 to 30 % by weight of modified polypropylenes having melt indices of 1 to 30 g/10 min at 230 °C/2.16 kg and of 95 to 70 % by weight of unmodified polypropylenes having melt indices of 1 to 40 g/10 min at 230 °C/2.16 kg.

6. The polyolefin expanded sheets and/or polyolefin coatings of Claim 3, wherein the polypropylenes in the polyolefin coatings manufactured by the glazing roller process consist of 5 to 30 % by weight of modified polypropylenes having melt indices of 0.25 to 15 g/10 min at 230 °C/2.16 kg and of 95 to 70 % by weight of unmodified polypropylenes having melt indices of 0.25 to 20 g/10 min at 230 °C/2.16 kg.

7. The polyolefin expanded sheets and/or polyolefin coatings of Claim 3, wherein the polypropylenes in the polyolefin sheets expanded with chemical or physical expanding agents consist of 5 to 100 % by weight of modified polypropylenes having melt indices of 0.25 to 12 g/10 min at 230 °C/2.16 kg and of 0 to 95 % by weight of unmodified polypropylenes having melt indices of 0.25 to 12 g/10 min at 230 °C/2.16 kg.

8. The polyolefin expanded sheets and/or polyolefin coatings of Claim 3, wherein the polypropylenes in the polyolefin coatings manufactured by the extrusion coating process consist of 5 to 30 % by weight of modified polypropylenes having melt indices of 1 to 50 g/10 min at 230 °C/2.16 kg and of 95 to 70 % by weight of unmodified polypropylenes having melt indices of 2 to 100 g/10 min at 230 °C/2.16 kg, preferably copolymers of propylene, ethylene and/or α-olefins having 4 to 18 C-atoms, which have a propylene content of 80.0 to 99.9 % by weight, in the form of random copolymers, block copolymers and/or random block copolymers, and/or the unmodified polypropylenes 2), 3) and/or 4).

9. A method of manufacturing polyolefin expanded sheets and/or polyolefin coatings of substrates such as fabrics, plastic sheets, paper, cardboard and metal, which have a high dimensional accuracy and thermal shock resistivity, by melting the polyolefins in continuous kneaders, preferably in extruders having an UD ratio of 20 to 40, at temperatures of 160 to 320 °C, homogenizing the polyolefins and
a) feeding the polyolefins as a melt onto a mixing mill and/or onto a calender, cooling, trimming and rolling the sheet; laminating onto sheet webs of metal sheets, plastic sheets, paper webs or textile webs, by insertion of a coupling agent layer if required, and rolling the multi-component composites; or
b) discharging the polyolefins through a sheet die, feeding them into a chill-roll unit and stripping them off as a sheet, trimming and rolling the sheet, or, in chill-roll units having several extruders, stripping them off as a coextrusion sheet, trimming and rolling the sheet; laminating or direct coating the sheet onto sheet webs of metal sheets, plastic sheets, paper webs or textile webs, by insertion of a coupling agent layer if required, and rolling the multi-component composites; or
c) laminating the sheet onto sheet webs of metal sheets, plastic sheets, paper webs or textile webs, by insertion of a coupling agent layer if required, and rolling the multi-component composites; or
d) after batching of expanding agents, discharging the polyolefins through a sheet die onto glazing rollers or into a chill-roll unit, stripping them off as an expanded sheet, trimming and rolling the sheet; or discharging the polyolefins through a tubular die, cooling them by injecting air and stripping them off through a sizing mandrel if required, with internal air cooling if required, as an expanded-sheet tube, slitting open, laying flat and rolling the expanded-sheet tube; or
e) discharging the melt film by the extrusion coating process directly onto the sheet webs of metal sheets, plastic sheets, paper webs or textile webs, by insertion of a coupling agent layer if required, and rolling the multi-component composites; or
f) discharging the polyolefins through a sheet die of a pipe coating unit and heat sealing them in the molten state onto the rotating pipe, by insertion of a coupling agent layer if required,
wherein the polyolefins consist of modified polypropylenes present in an amount of 5 to 50 % by weight in the mixture with unmodified polypropylenes and wherein the unmodified polypropylenes, preferably 95 to 50 % by weight, consist of
1) usual propylene polymers, preferably propylene homopolymers manufactured by using Ziegler-Natta catalysts or metallocene catalysts and/or copolymers of propylene, ethylene and/or α-olefins having 4 to 18 C-atoms, which have a propylene content of 80.0 to 99.9 % by weight, in the form of random copolymers, block copolymers and/or random block copolymers, which have melt indices of 0.1 to 300 g/10 min at 230 °C/2.16 kg, preferably 1 to 100 g/10 min at 230 °C/2.16 kg; and/or
2) a polyolefin mixture having an M_{w}/Mₙ ratio of 2 to 6 and a melt index of 1 to 40 g/10 min at 230 °C/2.16 kg which consists of
2.1) 60 to 98 % by weight of a crystalline copolymer of 85 to 99.5 % by weight of propylene and 15 to 0.5 % by weight of ethylene and/or an α-olefin of the general formula CH₂=CHR, where R is a linear or branched alkyl residue having 2 to 8 carbon atoms;
2.2) 2 to 40 % by weight of an elastic copolymer consisting of 20 to 70 % by weight of ethylene and 80 to 30 % by weight of propylene and/or an α-olefin of the general formula CH₂=CHR, where R is a linear or branched alkyl residue having 2 to 8 carbon atoms; and/or
3) substantially amorphous polypropylenes or propylene copolymers. having a content of crystalline polypropylene or crystalline propylene copolymer of less than 10 % by weight, an enthalpy of melting of less than 40 J/g and a melt index of 0.1 to 100 g/10 min at 230 °C/2.16 kg, the substantially amorphous polypropylene being a homopolymer of the propylene and/or a copolymer of the propylene which consists of at least 80 mole % of propylene and not more than 20 mole % of one or more α-olefins of the general formula CH₂=CHR, where R is a linear or branched alkyl residue having 2 to 8 carbon atoms; and/or
4) non-isotactic propylene homopolymers having a melting point of 145 to 165 °C, a melting viscosity of more than 200,000 cps at 190 °C, a heat of crystallization of 4 to 10 cal/g and a content soluble in diethyl ether of 35 to 55 % by weight,
wherein 0.01 to 2.5 % by weight of stabilizers, 0.01 to 1 % by weight of processing agents and, if required, 0.1 to 1 % by weight of antistatics, 0.2 to 3 % by weight of pigments, 0.05 to 1 % by weight of nucleation agents, 2 to 20 % by weight of flameproofing agents, each related to the sum of the polyolefins, as auxiliary agents, and/or, if required, 10 to 70 % by weight, preferably 20 to 50 % by weight, related to the sum of the polyolefins, of inorganic and/or organic filling and/or reinforcing agents are added to the polyolefins,
**characterized in that** the modified polypropylenes are modified propylene polymers having melt indices of 0.1 to 50 g/10 min at 230 °C/2.16 kg, preferably 1 to 40 g/10 min at 230 °C/2.16 kg, and a quotient of the intrinsic viscosity of the modified polypropylene and of the intrinsic viscosity of the unmodified polypropylene having substantially the same molar-mass weight average, of 0.20 to 0.95, and that the modified polypropylenes have been manufactured
a) by treating propylene homopolymers and/or copolymers of propylene and ethylene or α-olefins having 4 to 18 C-atoms as well as mixtures of the above polypropylenes with polyfunctionally ethylenically unsaturated monomers in the presence of ionizing radiation or thermally decomposing radical formers; or
b) by converting functionalized polypropylenes, preferably polypropylenes containing acid residues and/or acid anhydride residues, with polyfunctional compounds of opposite reactivity, preferably with C₂- to C₁₆-diamines and/or C₂- to C₁₆-diols; or
c) by hydrolytically condensing polypropylenes containing hydrolysable silane groups.

10. Use of polyolefin expanded sheets and polyolefin coatings of one or more of Claims 1 to 8 in the fields of packaging, specifically for food, detergent and drug packaging; textile and clothing industries, specifically for industrial protective clothing, sportswear and military clothing, interlining materials and decorative covering nonwovens; hygienic industry, specifically for baby diapers, plastic pants, incontinence products, pant liners and sanitary napkins; medicine, specifically for op clothing, infection protective clothing, table and bed linings; civil engineering, specifically for geotextile sheets, thermal and sound insulation, drainage and separation nonwovens and roof base sheeting; car and instrument manufacture, mechanical engineering, electrical engineering, electronic engineering, transportation systems and transportation packaging, household appliances and office and organization supplies.

## Revendications

1. Feuilles en polyoléfines expansées et / ou revêtements en polyoléfines pour des articles textiles plats, des feuilles en matières synthétiques, le papier, le carton et les métaux, présentant une précision dimensionnelle accrue et une résistance améliorée aux chocs thermiques, où les feuilles en polyoléfines expansées et / ou les revêtements en polyoléfines sont constitués par des polypropylènes modifiés, qui sont présents en mélange à raison de 5 à 50 % en poids avec des polypropylènes non modifiés et où les polypropylènes non modifiés, présents, de préférence, à raison de 95 à 50 % en poids, sont constitués par
1) des polypropylènes usuels, obtenus, de préférence, en faisant appel à ces catalyseurs du type Natta-Ziegler ou à des catalyseurs du type métallocènes, en l'occurrence des homopolymères du propylène et / ou des copolymères du propylène, de l'éthylène et / ou d'α-oléfines ayant de 4 à 18 atomes de carbone, avec une teneur en propylène de 80,0 à 99,9 % en poids, et se présentant sous la forme de copolymères statistiques, de copolymères bloc et / ou de copolymères bloc statistiques, avec des indices de fusion de 0,1 à 300 g / 10 min à 230 °C sous 2,16 kg et, de préférence, de 1 à 100 g / 10 min à 230 °C sous 2,16 kg, et / ou
2) des mélanges de polyoléfines avec un rapport M_{w} / Mₙ de 2 à 6 et avec un indice de fusion de 1 à 40 g / 10 min à 230 °C sous 2,16 kg, qui sont formés de
2.1) 60 à 98 % en poids d'un copolymère cristallin constitué de 85 à 99,5 % en poids de propylène et de 15 à 0,5 % en poids d'éthylène et / ou d'une α-oléfine ayant la formule générale CH₂ = CHR, dans laquelle R est un résidu alkyle droit ou ramifié ayant de 2 à 8 atomes de carbone et de
2.2) 2 à 40 % en poids d'un copolymère élastique constitué de 20 à 70 % en poids d'éthylène et de 80 à 30 % en poids de propylène et ou d'une α-oléfine ayant la formule générale CH₂ = CHR, dans laquelle R est un résidu alkyle droit ou ramifié ayant de 2 à 8 atomes de carbone
et / ou
3) les polypropylènes essentiellement amorphes ou les copolymères essentiellement amorphes du propylène avec une proportion de polypropylène cristallin ou de copolymère du propylène cristallin inférieure à 10 % en poids, une enthalpie de fusion inférieure à 40 J / g et un indice de fusion de 0,1 à 100 g / 10 min à 230 °C sous 2,16 kg, où les polypropylènes essentiellement amorphes sont un homopolymère du propylène et / ou un copolymère du propylène constitué d'au moins 80 % en moles de propylène et au maximum de 20 % en moles d'une ou de plusieurs α-oléfines ayant la formule générale CH₂ = CHR, dans laquelle R est un résidu alkyle droit ou ramifié ayant de 2 à 8 atomes de carbone, et / ou
4) des homopolymères non isotactiques du propylène avec un point de fusion de 145 à 165 °C, une viscosité à l'état fondu (à 190 °C) dépassant 200.000 cps, une chaleur de cristallisation de 4 à 10 cal / g et une portion soluble dans l'éther éthylique de 35 % à 55 % en poids,
où les polypropylènes contiennent, en tant qu'agents auxiliaires, de 0,01 à 2,5 % en poids d'agents stabilisants, de 0,01 à 1 % en poids d'un adjuvant de fabrication et, le cas échéant de 0,1 à 1 % en poids d'agents antistatiques, de 0,2 à 3 % en poids de pigments, de 0,05 à 1 % en poids d'un agent de nucléation, de 2 à 20 % en poids d'un agent ignifuge (tous ces pourcentages sont donnés par rapport au total des polypropylènes) et / ou, le cas échéant, de 10 à 70 % en poids et, de préférence, de 20 à 50 % en poids (par rapport au total des polypropylènes) de charges et / ou d'agents de renforcement, inorganiques et / ou organiques,
**caractérisés en ce que** les polypropylènes modifiés sont des polymères modifiés du propylène, avec des indices de fusion de 0,1 à 50 g / 10 min à 230 °C sous 2,16 kg et, de préférence, de 1 à 40 g / 10 min à 230 °C sous 2,16 kg et avec un quotient de la viscosité limite du polypropylène modifié sur la viscosité limite du polypropylène non modifié, ayant un poids moléculaire moyen en poids sensiblement identique, de 0,20 à 0,95 et **en ce qu'**ils peuvent être préparés
a) par le traitement d'homopolymères du propylène et / ou de copolymères du propylène et de l'éthylène ou d'α-oléfines ayant de 4 à 18 atomes de carbone, ainsi que de mélanges des polypropylènes mentionnés avec des monomères éthyléniquement insaturés polyfonctionnels, en présence d'un rayonnement ionisant ou d'initiateurs radicalaires décomposables par la chaleur ou
b) par la conversion de polypropylènes rendus fonctionnels et, de préférence, de polypropylènes contenant des groupes acides et / ou des groupes anhydrides d'acides, avec des composés polyfonctionnels ayant une réactivité opposée et, de préférence, avec des diamines en C₂ à C₁₆ et / ou avec des diols en C₂ à C₁₆ ou
c) par la condensation hydrolytique de polypropylènes contenant des groupes silanes hydrolysables.

2. Feuilles en polyoléfines expansées et / ou revêtements en polyoléfines selon la revendication 1, **caractérisés en ce que** les polymères modifiés du propylène sont obtenus par le traitement d'homopolymères du propylène et / ou de copolymères du propylène et de l'éthylène ou d'α-oléfines ayant de 4 à 18 atomes de carbone, ainsi que de mélanges des polypropylènes mentionnés, par des monomères éthyléniquement insaturés polyfonctionnels, en présence d'un initiateur radicalaire décomposable par la chaleur, par un procédé continu, dans lequel
1) des particules de polypropylène sous la forme de poudres fines, de poudres plus grossières ou de granulés ayant une granulométrie préférée dans la plage de 0,001 à 7 mm,
1.1) qui sont constituées par des homopolymères du propylène et, en particulier, par des homopolymères du propylène avec une répartition bimodale du poids moléculaire, un poids moléculaire moyen en poids M_{w} de 500.000 à 1.500.000 g / mole, un poids moléculaire moyen en nombre Mₙ de 25.000 à 100.000 g / mole, un rapport M_{w} / Mₙ de 5 à 60 et préparés dans un réacteur en cascade en faisant appel à des catalyseurs du type Ziegler-Natta ou à des catalyseurs du type métallocènes et / ou
1.2) par des copolymères du propylène et de l'éthylène ou d'α-oléfines ayant de 4 à 18 atomes de carbone, de préférence des copolymères statistiques du propylène, des copolymères bloc du propylène, des copolymères bloc statistiques du propylène et / ou des polypropylènes élastomères ou par des mélanges des polypropylènes modifiés mentionnés, sont mélangées dans un mélangeur continu avec de
0,05 à 3 % en poids (par rapport aux polypropylènes mis en oeuvre) de peroxydes d'acyle, de peroxydes d'alkyle, d'hydroperoxydes, de percarbonates et / ou de peresters constituant l'initiateur radicalaire décomposable par la chaleur, dont la décomposition thermique est effective, de préférence, en dessous de 210 °C et qui est dilué, le cas échéant, avec des milieux solvants inertes, en chauffant à 30 - 100 °C et, de préférence, à 70 - 90 °C,
2) des monomères bifonctionnels très volatiles et, en particulier, des diènes en C₄ à C₁₀ et / ou des composés divinyle en C₇ à C₁₀ sont absorbés par les particules de polypropylène depuis la phase gazeuse, de préférence dans un mélangeur continu fonctionnant comme un absorbeur continu de la phase gazeuse par la phase solide, à une température T de 20 °C à 120 °C et, de préférence, de 60 à 100 °C et avec un temps d'absorption moyen τₛ de 10 s à 1.000 s et, de préférence, de 60 s à 600 s, la proportion des monomères insaturés bifonctionnels dans les particules de polypropylène étant de 0,01 à 10 % en poids et, de préférence, de 0,05 à 2 % en poids (par rapport aux polypropylènes mis en oeuvre),
3) ensuite, les particules de polypropylène dans lesquelles ont été absorbés les peroxydes d'acyle, les peroxydes d'alkyle, les hydroperoxydes, les percarbonates et / ou les peresters mis en oeuvre en tant qu'initiateur radicalaire décomposable par la chaleur, ainsi que les monomères insaturés bifonctionnels, sont fondues à 110 °C - 210 °C sous une atmosphère constituée par un gaz inerte et par ces monomères bifonctionnels très volatiles dans un malaxeur fonctionnant en continu ou dans une extrudeuse (de préférence, dans une extrudeuse à deux vis), ce qui permet de détruire l'initiateur radicalaire décomposable par la chaleur,
4) la masse fondue est ensuite chauffée à 220 °C - 300 °C, pour éliminer les monomères qui n'ont pas réagi et les produits de décomposition, et
5) la masse fondue est granulée de manière connue,
où avant l'étape 1) et / ou l'étape 5) et / ou avant ou durant l'étape 3) et / ou l'étape 4) du procédé, on ajoute, en tant qu'agent auxiliaire additionnel, de 0,01 à 2,5 % en poids de stabilisants, de 0,1 à 1 % en poids d'agents antistatiques, de 0,2 à 3 % en poids de pigments, de 0,05 à 1 % en poids d'agent de nucléation et / ou de 0,01 à 5 % en poids d'un adjuvant de fabrication (tous ces pourcentages sont donnés par rapport aux polypropylènes mis en oeuvre).

3. Feuilles en polyoléfines expansées et / ou revêtements en polyoléfines selon une des revendications 1 et 2 ou selon ces deux revendications, **caractérisés** en ce ces feuilles en polyoléfines expansées sont des feuilles expansées avec des agents gonflants chimiques ou physiques et en ce que ces revêtements en polyoléfines sont
a) des revêtements de polyoléfines obtenus par un procédé de calandrage,
b) des revêtements de polyoléfines obtenus par des procédés d'extrusion sur rouleau froid (procédé « chill-roll »),
c) des revêtements de polyoléfines obtenus par des procédés de lissage,
d) des revêtements de polyoléfines obtenus par des procédés de couchage par extrusion,
e) des revêtements de polyoléfines obtenus par des procédés de revêtement applicables aux tubes,
f) des revêtements de polyoléfines obtenus par des procédés utilisés pour réaliser les enveloppes des câbles.

4. Feuilles en polyoléfines expansées et / ou revêtements en polyoléfines selon la revendication 3, **caractérisés en ce que** les polypropylènes dans les revêtements en polyoléfines obtenus par les procédés de calandrage sont constitués de 5 à 50 % en poids de polypropylènes modifiés avec des indices de fusion de 0,25 à 8 g / 10 min à 230 °C sous 2,16 kg et de 95 à 50 % en poids de polypropylènes non modifiés avec des indices de fusion de 0,25 à 20 g / 10 min à 230 °C sous 2,16 kg et, de préférence, de copolymères du propylène, de l'éthylène et / ou d'α-oléfines ayant de 4 à 18 atomes de carbone, avec une teneur en propylène de 80,0 à 99,9 % en poids, se présentant sous la forme de copolymères statistiques, de copolymères bloc et / ou de copolymères bloc statistiques et / ou des polypropylènes non modifiés 2), 3) et / ou 4).

5. Feuilles en polyoléfines expansées et / ou revêtements en polyoléfines selon la revendication 3, **caractérisés en ce que** les polypropylènes dans les revêtements en polyoléfines réalisés par le procédé d'extrusion sur rouleau froid sont constitués de 5 à 30 % en poids de polypropylènes modifiés avec des indices de fusion de 1 à 30 g / 10 min à 230 °C sous 2,16 kg et de 95 à 70 % en poids de polypropylènes non modifiés avec des indices de fusion de 1 à 40 g / 10 min à 230 °C sous 2,16 kg.

6. Feuilles en polyoléfines expansées et / ou revêtements en polyoléfines selon la revendication 3, **caractérisés en ce que** les polypropylènes dans les revêtements en polypropylènes réalisés par le procédé de lissage sont constitués de 5 à 30 % en poids de polypropylènes modifiés avec des indices de fusion de 0,25 à 15 g / 10 min à 230 °C sous 2,16 kg et de 95 à 70 % en poids de polypropylènes non modifiés avec des indices de fusion de 0,25 à 20 g / 10 min à 230 °C sous 2,16 kg.

7. Feuilles en polyoléfines expansées et / ou revêtements de polyoléfine selon la revendication 3,**caractérisés en ce que** les polypropylènes dans les feuilles de polyoléfines expansées avec un agent gonflant physique et / ou chimique sont constitués de 5 à 100 % en poids de polypropylènes modifiés avec des indices de fusion de 0,25 à 12 g / 10 min à 230 °C sous 2,16 kg et de 0 à 95 % en poids de polypropylènes non modifiés avec des indices de fusion de 0,25 à 12 g / 10 min à 230 °C sous 2,16 kg.

8. Feuilles en polyoléfines expansées et / ou revêtements en polyoléfines selon la revendication 3, **caractérisés en ce que** les polypropylènes utilisés pour les revêtements en polyoléfines réalisés par des procédés de couchage par extrusion sont constitués de 5 à 30 % en poids de polypropylènes modifiés avec des indices de fusion de 1 à 50 g / 10 min à 230 °C sous 2,16 kg et de 95 à 70 % en poids de polypropylènes non modifiés avec des indices de fusion de 2 à 100 g / 10 min à 230 °C sous 2,16 kg et, de préférence, de copolymères du propylène, de l'éthylène et / ou d'α-oléfines ayant de 4 à 18 atomes de carbone, avec une teneur en propylène de 80,0 à 99,9 % en poids, se présentant sous la forme de copolymères statistiques, de copolymères bloc et / ou de copolymères bloc statistiques et / ou de polypropylènes non modifiés 2), 3) et / ou 4).

9. Procédé de fabrication de feuilles en polyoléfines expansées et / ou de revêtements en polyoléfines sur des substrats tels que des articles textiles plats, des feuilles en matières synthétiques, le papier, le carton et les métaux, présentant une précision dimensionnelle accrue et une résistance améliorée aux chocs thermiques, par fusion et homogénéisation des polyoléfines dans une installation de malaxage fonctionnant en continu et, de préférence, dans une extrudeuse avec un rapport L / D de 20 à 40, à des températures de 160 à 320 °C et
a) transfert de la masse fondue dans une installation avec des cylindres malaxeurs et / ou une calandre, refroidissement, ébarbage et enroulement de la feuille ; déroulement sur la surface plane de feuilles métalliques, de feuilles en matières synthétiques, de bandes de papier, de bandes de textile, le cas échéant en intercalant une couche d'un agent adhésif, et enroulement du composite à couches multiples
ou
b) extrusion par une filière plate vers une installation avec un rouleau froid, ébarbage et enroulement de la feuille ; ou, dans le cas d'installations avec plusieurs filières d'extrusion, formation de feuilles co-extrudées, ébarbage et enroulement ; puis déroulement / application directe sur les surfaces planes de feuilles métalliques, de feuilles en matières synthétiques, de bandes de papier, de bandes de textile, le cas échéant en intercalant une couche d'un agent adhésif, pour former ainsi des composites à couches multiples, ou
c) déroulement sur les surfaces planes de feuilles métalliques, de feuilles en matières synthétiques, de bandes de papier ou de bandes de textile, le cas échéant en intercalant une couche d'un agent adhésif et enroulement du composite à couches multiples, ou
d) après l'adjonction d'un agent gonflant et extrusion par une filière plate et passage dans une installation de lissage ou dans une installation à rouleau froid, ébarbage de la feuille expansée et enroulement ; ou extrusion par une filière annulaire, le cas échéant refroidissement par injection d'air et transfert sur un mandrin de calibrage, le cas échéant avec un refroidissement interne par de l'air, ouverture par découpage du tube constitué par une couche expansée, mise à plat de ladite couche et enroulement, ou
e) application d'un film de la masse fondue directement après la filière d'extrusion sur les surfaces planes de feuilles métalliques, de feuilles de matière synthétique, de bandes de papier ou de bandes de textile, le cas échéant en intercalant une couche d'un agent adhésif et enroulement du composite à couches multiples, ou
f) extrusion de la masse fondue par une filière d'extrusion plate d'une installation servant à réaliser des revêtements sur des tubes et application de la masse fondue sur un tube qui tourne, le cas échéant en intercalant une couche d'un agent adhésif,
où les polyoléfines sont constituées par des polypropylènes modifiés, qui sont présents en mélange à raison de 5 à 50 % en poids avec des polypropylènes non modifiés et où les polypropylènes non modifiés, présents de préférence à raison de 95 à 50 % en poids, sont constitués par
1) des polypropylènes usuels, obtenus de préférence en faisant appel à ces catalyseurs du type Ziegler-Natta ou à des catalyseurs du type métallocènes, en l'occurrence des homopolymères du propylène et / ou des copolymères du propylène, de l'éthylène et / ou d'α-oléfines ayant de 4 à 18 atomes de carbone avec une teneur en propylène de 80,0 à 99,9 % en poids, sous la forme de copolymères statistiques, de copolymères bloc et / ou de copolymères bloc statistiques, avec des indices de fusion de 0,1 à 300 g / 10 min à 230 °C sous 2,16 kg et, de préférence, de 1 à 100 g / 10 min à 230 °C sous 2,16 kg, et / ou
2) un mélange de polyoléfines avec un rapport M_{w} / Mₙ de 2 à 6 et un indice de fusion de 1 à 40 g / 10 min à 230 °C sous 2,16 kg et qui est constitué de
2.1) 60 à 98 % en poids d'un copolymère cristallin contenant de 85 à 99,5 % en poids de propylène et de 15 à 0,5 % en poids d'éthylène et / ou d'une α-oléfine ayant la formule générale CH₂ = CHR, dans laquelle R est un résidu alkyle droit ou ramifié ayant de 2 à 8 atomes de carbone, et de
2.2) 2 à 40 % en poids d'un copolymère élastique contenant de 20 à 70 % en poids d'éthylène et de 80 à 30 % en poids de propylène et ou d'une α-oléfine ayant la formule générale CH₂ = CHR, dans laquelle R est un résidu alkyle droit ou ramifié ayant de 2 à 8 atomes de carbone
et / ou
3) des polypropylènes essentiellement amorphes ou des copolymères essentiellement amorphes du propylène avec une portion de polypropylène cristallin ou de copolymère du propylène cristallin inférieure à 10 % en poids, une enthalpie de fusion inférieure à 40 J / g et un indice de fusion de 0,1 à 100 g / 10 min à 230 °C sous 2,16 kg, où le polypropylène essentiellement amorphe est un homopolymère du propylène et / ou un copolymère du propylène contenant au moins 80 % en moles de propylène et au maximum de 20 % en moles d'une ou de plusieurs α-oléfines ayant la formule générale CH₂ = CHR, dans laquelle R est un résidu alkyle droit ou ramifié ayant de 2 à 8 atomes de carbone,
4) des homopolymères non isotactiques du propylène avec un point de fusion de 145 à 165 °C, une viscosité à l'état fondu (à 190 °C) dépassant 200.000 cps, une chaleur de cristallisation de 4 à 10 cal / g et une portion soluble dans l'éther éthylique de 35 % à 45 % en poids
où les polyoléfines contiennent, en tant qu'agents auxiliaires, de 0,01 à 2,5 % en poids d'agents stabilisants, de 0,01 à 1 % en poids d'un adjuvant de fabrication et, le cas échéant de 0,1 à 1 % en poids d'agents antistatiques, de 0,2 à 3 % en poids de pigments, de 0,05 à 1 % en poids d'un agent de nucléation, de 2 à 20 % en poids d'un agent ignifuge (tous ces pourcentages sont donnés par rapport au total des polypropylènes) et / ou, le cas échéant, de 10 à 70 % en poids et, de préférence, de 20 à 50 % en poids (par rapport au total des polyoléfines) des charges et / ou des agents de renforcement inorganiques et / ou organiques,
**caractérisés en ce que** les polypropylènes modifiés sont des polymères modifiés du propylène ayant des indices de fusion de 0,1 à 50 g / 10 min à 230 °C sous 2,16 kg et, de préférence de 1 à 40 g / 10 min à 230 °C sous 2,16 kg et un quotient de la viscosité limite du polypropylène modifié sur la viscosité limite du polypropylène non modifié avec un poids moléculaire moyen en poids sensiblement identique de 0,20 à 0,95, et **en ce qu'**ils peuvent être préparés
a) par le traitement d'homopolymères du propylène et / ou de copolymères du propylène et de l'éthylène ou d'α-oléfines ayant de 4 à 18 atomes de carbone, ainsi que de mélanges des polypropylènes mentionnés avec des monomères éthyléniquement insaturés polyfonctionnels, en présence d'un rayonnement ionisant ou d'initiateurs radicalaires décomposables par la chaleur ou
b) par la conversion de polypropylène rendu fonctionnel et, de préférence, de polypropylènes contenant des groupes acides et / ou des groupes anhydrides d'acides, avec des composés polyfonctionnels ayant une réactivité opposée et, de préférence, avec des diamines en C₂ à C₁₆ et / ou avec des diols en C₂ à C₁₆ ou
c) par la condensation hydrolytique de polypropylènes contenant des groupes silanes hydrolysables.

10. Utilisation de feuilles de polyoléfines expansées et de revêtements en polyoléfines selon une ou plusieurs des revendications 1 à 8 dans les secteurs de l'emballage, en particulier pour le conditionnement d'aliments, de produits d'entretien et de médicaments ; dans l'industrie textile et dans l'industrie des vêtements, en particulier pour la réalisation de vêtements de protection, de vêtements de sport et ou de vêtements militaires, de doublures et de revêtements non-tissés décoratifs ; dans l'industrie des articles d'hygiène, en particulier pour des couches pour les bébés, des culottes ou autres articles pour personnes incontinentes, les doublures pour les slips et pour les serviettes hygiéniques ; en médecine, et en particulier pour les vêtements utilisés lors d'opérations, les vêtements de protection contre les infections, comme couvre-tables et comme couvre-lits ; dans l'industrie du bâtiment, en particulier pour les feuilles géotextiles, l'isolation thermique et acoustique, les non-tissés utilisés pour le drainage, pour les cloisons et pour les toitures ; dans l'industrie automobile, l'industrie des appareils et des machines, en électrotechnique, en électronique ; les systèmes de transport et les conteneurs de transport ; les appareils ménagers, et les articles et fournitures de bureau.
